(19) Europäisches Patentamt / European Patent Office / Office européen des brevets

(11) **EP 1 564 958 B1**

(12) **EUROPEAN PATENT SPECIFICATION**

(45) Date of publication and mention
of the grant of the patent:
**10.01.2007 Bulletin 2007/02**

(51) Int Cl.:
***H04L 29/06*** (2006.01)

(21) Application number: **05000920.8**

(22) Date of filing: **18.01.2005**

(54) **Method for assigning a virtual-ip zone in a mobile ipv6 system**

Verfahren zur Zuordnung einer virtuellen IP-Zone in einem mobilen IPv6 System

Procédé d'allocation d'une zone IP virtuelle dans le système IPv6 mobile

(84) Designated Contracting States:
**DE FI FR GB IT SE**

(30) Priority: **12.02.2004 KR 2004009398**

(43) Date of publication of application:
**17.08.2005 Bulletin 2005/33**

(73) Proprietors:
• **SAMSUNG ELECTRONICS CO., LTD.**
**Suwon-si,**
**Gyeonggi-do (KR)**
• **Yonsei University**
**Seoul (KR)**

(72) Inventors:
• **Cho, Sung-Hyun**
**Yeogtong-gu**
**Suwon-si**
**Gyeonggi-do (KR)**
• **Park, Won-Hyoung**
**Yeogtong-gu**
**Suwon-si**
**Gyeonggi-do (KR)**

• **Yun, Sang-Boh**
**Yeogtong-gu**
**Suwon-si**
**Gyeonggi-do (KR)**
• **Lee, Jai-Yong**
**Seoul (KR)**
• **Kim, Tae-Hyoun**
**Suwon-si (KR)**

(74) Representative: **Grünecker, Kinkeldey,**
**Stockmair & Schwanhäusser**
**Anwaltssozietät**
**Maximilianstrasse 58**
**80538 München (DE)**

(56) References cited:
**EP-A- 1 379 034** **WO-A-03/034683**

• SOLIMAN H. ET ALL: "Hierarchical Mobile IPv6
mobility management (HMIPv6) , draft-ietf-
mipshop-hmipv6-00.txt" IETF MOBILE IP
WORKING GROUP DRAFT, June 2003 (2003-06),
XP002327159 IETF

**Description**

The present invention relates generally to an Internet Protocol (IP) assignment method in a Mobile IP system, and in particular to an IP assignment method in a Mobile Internet Protocol Version 6 (IPv6) system.

Generally, a Mobile Internet Protocol (MIP) system refers to a system using Internet Protocol (IP). The MIP system is being developed from an earlier IPv4-based system into an advanced IPv6-based system used for increasing available IP resource and the number of users and providing various services. The MIP system assigns an IP address to each mobile node (MN) and allows the MN to perform communication using the assigned IP address. Such a MIP system is roughly divided into a Mobile IPv6 (MIPv6) system and a Hierarchical Mobile IPv6 (HMIPv6) system.

The MIP system secures mobility of MNs. Therefore, a MN can continue communication even while it moves from a position of its home agent (HA) to a position of a foreign agent (FA). This is equally applied to both a MIPv4-based system and a MIPv6-based system, however, these systems are slightly different in operation. A method for securing mobility of MNs in a MIPv6 system and a HMIPv6 system will be described herein below.

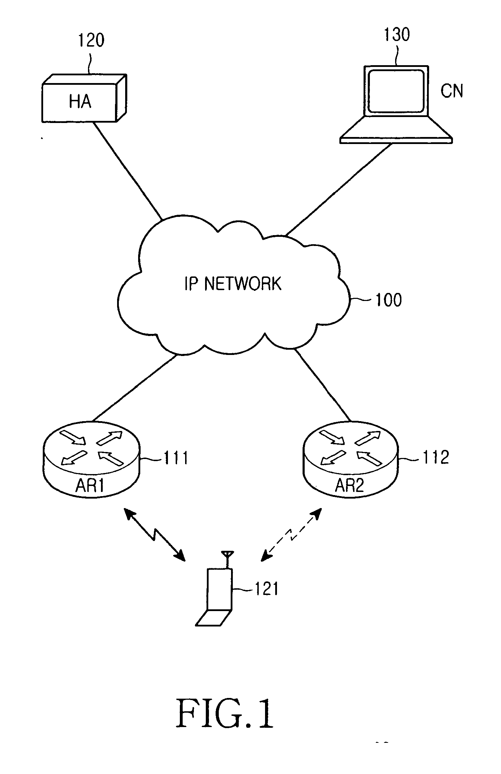

First, with reference to FIG. 1, a description will be made of a schematic configuration of a MIPv6 system and an operation of a MN while it is on the move. FIG. 1 is a diagram illustrating a configuration of a MIPv6 system. Referring to FIG. 1, a correspondent node (CN) 130 in communication with an MN 121, HA 120 and access routers AR1 and AR2 (111 and 112) are connected to an IP network 100. The HA 120 has all or some information on the MN 121, and store the information of the MN. The HA 120 stores the information together with location information of the MN 121 and information on a currently used IP address. The CN 130, a node in communication with the MN 121, receives data from and/or transmits data to the MN 121. A first access router (AR1) 111 is a node engaged in wireless communication with the MN 121. In FIG. 1, an arrow between AR1 111 and MN 121, represents ongoing communication. A second access router (AR2) 112 communicates with the MN 121 when the MN 121 enters a region of coverage of the second access router 112.

When the MN 121 moves from a region of the HA 120 to a region of the first access router 111, the MN 121 generates a Care-of Address (CoA) message using new network prefix information advertised by the first access router 111. The CoA is a new IP address that the MN 121 acquires each time it moves to the region of coverage of a new router. Thereafter, the MN 121 transmits a Binding Update (BU) message to the HA 120 to inform it of the CoA that the MN 121 has newly generated using the prefix information provided by the first access router 111, and its own home address. The "home address" represents a fixed permanent address of the MN 121. When the CN 130 desires to communicate with the MN 121, the CN 130 forwards a traffic to be transmitted to the MN 121 to the HA 120. Then the HA 120 forwards the traffic received from the CN 130 to the MN 121 via the first access router 111. The transmission is performed according to the report by the BU message sent from the MN 121. Thereafter, the MN 121 informs the CN 130 of the CoA, which is newly generated from the first access router 111.The CN 130 recognizes the CoA of the MN 121, and can directly communicate with the MN 121 via the first access router 111 without the HA 120.

After moving to a region of the second access router 112, the MN 121 again generates a CoA, using new network prefix information advertised by the second access router 112. Then the MN 121 again informs the HA 120 of its own home address and of the CoA, newly generated from the second access router 112 using a BU message. In this manner, the HA 120 acquires a new CoA of the MN 121. If the MN 121 was in communication with the CN 130, the MN 121 again informs the CN 130 of the CoA, newly acquired from the second access router 112, and the CN 130 can directly communicate with the MN 121 via the first access router 111 without reliance on the HA 120.

When the MN 121 moves from the first access router 111 to the second access router 112, data loss may occur while the MN 121 sends a BU message to the HA 120. As described above, the MN 121 must transmit a BU message to the HA 120 each time it moves to a new access router, causing a loss of the network resource. In order to resolve this problem, a HMIPv6-based system has been introduced.

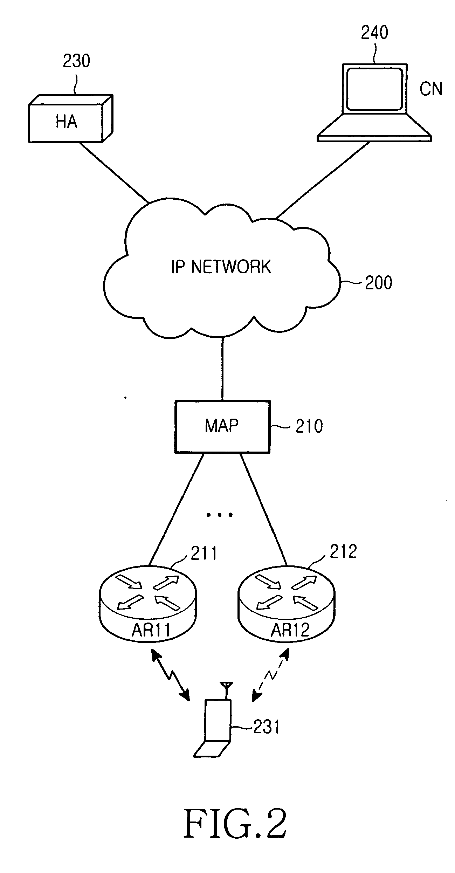

Next, with reference to FIG. 2, a description will be made of a schematic configuration of a HMIPv6 system and an operation of a MN while it is on the move. FIG. 2 is a diagram illustrating a configuration of a HMIPv6 system. Compared with the MIPv6 system described with reference to FIG. 1, the HMIPv6 system further includes a mobility anchor point (MAP) 120. However, the HMIPv6 system is considerably different from the MIPv6 system in operation which is for example disclosed in WO03/034683. A detailed description thereof will be made herein below.

A HA 230 and a CN 240 are functionally similar to the HA 120 and the CN 130 of FIG. 1 in structure and operation. An IP network 200 is also identical to the IP network 100 of FIG. 1 in operation. When a MN 231 moves from a region of the HA 230 to a region of a first access router 211 under a MAP 210, the MN 231 generates two CoA messages using information advertised from a first access router 211. That is, the MN 231 generates an On-Link Care-of Address (LCoA) using network prefix information from the first access router 211, and a Regional Care-of Address (RCoA) using MAP option information. Thereafter, the MN 231 sends a local BU message to a MAP address obtained through the MAP option information. The local BU message includes a LCoA and a RCoA that the MN 231 has generated from the information advertised by the first access router 211.The MAP 210 stores a LCoA and a RCoA of the MN 231. Thereafter, the MN 231 informs the HA 230 of the newly acquired RCoA and its own home address through a BU message. Then the HA 230 stores the RCoA and the home address reported by the MN 231.

When the CN 240 desires to communicate with the MN 231, the CN 240 forwards communication traffic to be transmitted to the MN 231 to the HA 230. Then the HA 230 forwards the communication traffic provided from the CN 240 to the RCoA stored as an address of the MN 231 and requests the MAP 210 to forward the communication traffic to the MN 231. The MAP 210 delivers the communication traffic received from the HA 230 to the stored LCoA according to the BU message reported by the MN 231, thereby transmitting the communication traffic to the MN 231.

When the MN 231 moves to a region of a second access router 212, the MN 231 receives a network prefix and a MAP option advertised by the second access router 212. Because the first access router 211 and the second access router 212 belong to the same MAP 210, the network prefix that the MN 231 received via the second access router 212 is different from the network prefix that the MN 231 received via the first access router 211. However, the MAP option received from the second access router 212 is identical to the MAP option received from the first access router 211. Therefore, the MN 231 is allowed to update only the LCoA. Thus, the MN 231 transmits a local BU message only to the MAP 210. The local BU message transmitted by the MN 231 is delivered to the MAP 210 via the second access router 212, and the MAP 210 updates only the LCoA. That is, the MN 231 does not transmit the local BU message to the HA 230 and the CN 240. When the MN 231 moves within the MAP 210, the MN 231 is allowed to transmit a local BU message only up to the MAP 210, thereby reducing a signaling load in the IP network 200. In addition, when a MN 231 moves under the same MAP, the MN transmits a local BU message only up to the MAP 210, thereby contributing to a reduction in the communication traffic loss.

There exists mobile communication systems, e.g., a system that transmits data to a MN using a wireless channel, like an IP-based systems such as the MIPv6 or the HMIPv6 systems. Such mobile communication systems are fundamentally based on voice communication, and have evolved into systems capable of performing packet data communication. For example, a 1xEV DO system, a commercialized Third Generation (3G) system, is dedicated to transmitting only high-rate packet data. In such a mobile communication system, a handover concept for providing mobility of a MN has been introduced a long time ago. Because a MN has mobility and requiring low weight and small size, it uses a low-capacity battery. The MN using a low-capacity battery cannot transmit data at high rate where high battery power is required. That is, an increase in data rate causes an increase in required power, and the increase in power increases a current consumed in the battery. As a result, a lifetime of the battery is reduced.

As a distance between an access router (AR) and a MN in a mobile communication system and a data rate increase, battery consumption of the MN is also increased resulting in a reduction in run time of the MN. Additionally, when a MN moves to a region of limited connectivity, the MN consumes a large amount of power in order to locate an AR, similarly reducing a lifetime of the battery. In order to resolve such problems, ARs having small regions are used in the mobile communication system.

The MIPv6 system must be applied to a current mobile communication system or a separate system. If the MIPv6 system is applied to a 3G system or a 4G system, which is a next generation system, access routers managing small regions must be addressed. When access routers manage small regions, handover may occur frequently in a particular area.

When handover occurs frequently, a MN must continuously transmit a BU message or a local BU message to access routers or a MAP. The continuous transmission of a BU message or a local BU message results in a decrease in availability of a wireless link resource. In wireless network, wireless links have less bandwidth resource and are not easy to extend, compared with wired network links. A signaling overhead related to mobility greatly affects the wireless links. A size of cells in a wireless communication network is being miniaturized. Accordingly, handover may frequently occur, worsening the availability of the wireless links. In addition, when a MN uses a battery and frequently performs handover, a lifetime of the battery can be reduced.

Furthermore, if the MN continuously uses a BU message or a local BU message, other MNs may experience interference due to deterioration in communication quality. Such a phenomenon occurs in both the MIPv6-based and the HMIPv6-based systems. That is, the HMIPv6-based system cannot reduce the signaling load in a wireless channel.

It is, therefore, the object of the present invention to provide a method for reducing wireless bandwidth resource in a HMIPv6-based system.

This object is solved by the subject matter of the independent claims.

Preferred embodiments are defined in the dependent claims.

It is an aspect of the present invention to provide a method for preventing handover from frequently occurring in a particular region in a HMIPv6-based system.

It is another aspect of the present invention to provide a method for increasing a run time of a MN using a battery in a HMIPv6-based system, and a method for increasing communication quality by reducing interference of a wireless channel due to a bad message reception.

In accordance with one aspect of the present invention, there is provided a method for forming access routers into a virtual-IP zone in a Hierarchical Mobile IP (HMIP) system. The method includes reporting a higher-than-threshold state message to a mobility anchor point by each access router if the number of MNs located in its region and the number of MNs being handed over exceed a predetermined threshold; the mobility anchor point sending a virtual-IP zone forming command for grouping access routers into one group to the access routers if a state report message indicating a higher-than-threshold state is received; and the access routers receiving the virtual-IP zone forming command simulcasting an identical virtual network prefix included in the virtual-IP zone forming command for grouping.

In accordance with another aspect of the present invention, there is provided a method for releasing access routers within a virtual-IP zone in a mobility anchor point in a Hierarchical Mobile IP (HMIP) system. The method includes sending a virtual-IP zone releasing command for ungrouping to the access routers in a virtual-IP zone if a virtual-IP zone release request message is received from at least one of access routers connected under the mobility anchor point,; and transmitting a virtual-IP zone release command to the access routers forming the virtual-IP zone if a virtual-IP zone release request message is received from the access routers forming the virtual-IP zone,.

In accordance with further another aspect of the present invention, there is provided a method for forming access routers into a virtual-IP zone by an access router in a Hierarchical Mobile IP (HMIP) system including a mobility anchor point and access routers connected under the mobility anchor point. The method includes reporting a higher-than-threshold state message to the mobility anchor point if the number of MNs located in a region of an access router and the number of MNs being handed over exceed a predetermined threshold; and simulcasting a virtual network prefix included in the virtual-IP zone forming command to MNs by access routers receiving the virtual-IP zone forming command from the mobility anchor point.

The above object and other aspects, features and advantages of the present invention will become more apparent from the following detailed description when taken in conjunction with the accompanying drawings in which:

FIG. 1 is a diagram illustrating a configuration of a Mobile internet Protocol (MIP) v6 system;
FIG. 2 is a diagram illustrating a configuration of a Hierarchical MIP (HMIP) v6 system;
FIG. 3 is a diagram illustrating a virtual Internet Protocol (IP) zone assignment scheme in a HMIPv6 system according to an embodiment of the present invention;
FIG. 4 is a state transition diagram for a virtual-IP zone assignment scheme in an access router of a HMIPv6 system according to an embodiment of the present invention;
FIG. 5A is a diagram illustrating a static virtual-IP zone assignment scheme in a HMIPv6 system according to an embodiment of the present invention;
FIG. 5B is a diagram illustrating a dynamic virtual-IP zone assignment scheme in a HMIPv6 system according to an embodiment of the present invention;
FIG. 6 is a diagram illustrating a method for setting and releasing a virtual-IP zone of access routers according to an embodiment of the present invention;
FIG. 7 is a flowchart illustrating a method for performing virtual-IP zone assignment according to an embodiment of the present invention;
FIG. 8 is a diagram illustrating an operation of a moving mobile node in a normal state in a HMIPv6 system;
FIG. 9 is a diagram illustrating a process of registering a mobile node and a process of transmitting data to a mobile node in a virtual-IP zone initiation state according to an embodiment of the present invention;
FIG. 10 is a diagram illustrating an operation of a moving mobile node in a virtual-IP zone state according to an embodiment of the present invention;
FIG. 11 is a diagram illustrating a process of registering a mobile node and a process of transmitting data to a mobile node in a virtual-IP zone release state according to an embodiment of the present invention;
FIG. 12 is a diagram illustrating a network for verifying mobility modeling of a virtual-IP zone assignment scheme according to an embodiment of the present invention;
FIGs. 13A and 13B are graphs illustrating analysis results on a wireless signaling cost and mobility of a mobile node;
FIGs. 14A and 14B are analysis result graphs illustrating a change in wireless signaling cost in the conventional technology (HMIPv6) and the represent invention when only a size of a virtual-IP zone is changed; and
FIG 15 is an analysis result graph for a signaling cost in a wireless channel with respect to a virtual-IP zone progress time according to an embodiment of the present invention.

A preferred embodiment of the present invention will now be described in detail with reference to the annexed drawings. In the following description, a detailed description of known functions and configurations incorporated herein has been omitted for conciseness.

First, a general concept of the present invention will be described. The present invention is directed to a Hierarchical Mobile Internet Protocol HMIPv6-based system. In the present invention, if many MNs frequently move about regions of particular access routers, i.e., handover between particular access routers occurs frequently, the access routers are set as a virtual-IP zone. A virtual-IP zone assignment scheme according to the present invention assigns the same virtual network prefix to access routers having a large number of MNs and a high handover rate. That is, the access routers assigned the same virtual network prefix constitute a virtual-IP zone. In this structure, even though a MN moves to a new access router in the same virtual-IP zone, i.e., even though handover occurs, current the Care-of Address (CoA) remains unchanged, so that the MN does not transmit a local Binding Update (BU) message. Therefore, a BU message is reduced in a wireless channel section transmitted from a MN to an access router, thereby reducing overhead due to signal transmissions.

The virtual-IP zone assignment scheme is effective particularly in a region where mobility of MNs is high. In particular, the virtual-IP zone assignment scheme is very effective in a region such as a shopping mall, campus, amusement center, public garden, event field, etc., where MNs move around very frequently. , Such a virtual-IP zone is not continuously maintained, and can be set up and released by a particular condition.

Herein, a description of the present invention will be divided into three parts. First, a general operation will be described in the following order.

> 1. System for Virtual-IP Zone Assignment in a HMIPv6 system
> 2. State Transition in Virtual-IP Zone Assignment Scheme
> 3. Dynamic/Static Virtual-IP Zone Assignment and Release Condition
> 4. General Algorithm for Virtual-IP Zone Assignment and Release

Second, a virtual-IP zone assignment and release operation performed in a mobility anchor point (MAP) will be described. An operation performed in the MAP will be described with reference to an actual signal flow and movement of MNs. The second operation will be described in the following order.

> 1. Operation of Moving MN in Normal State
> 2. Registration of MN in Virtual-IP Zone Initiation State
> 3. Operation of Moving MN in Virtual-IP Zone State
> 4. Virtual-IP Zone Release Process in Virtual-IP Zone Release State

Third, effects of the virtual-IP zone assignment according to the present invention will be described. In this description, mobility modeling is performed using a fluid flow model in order to provide better understanding of the effects of the present invention. In addition, a comparison will be made between effects of the new modeling proposed by the present invention and effects of the conventional modeling.

**General Operation**

1. System for Virtual-IP Zone Assignment in a HMIPv6 system

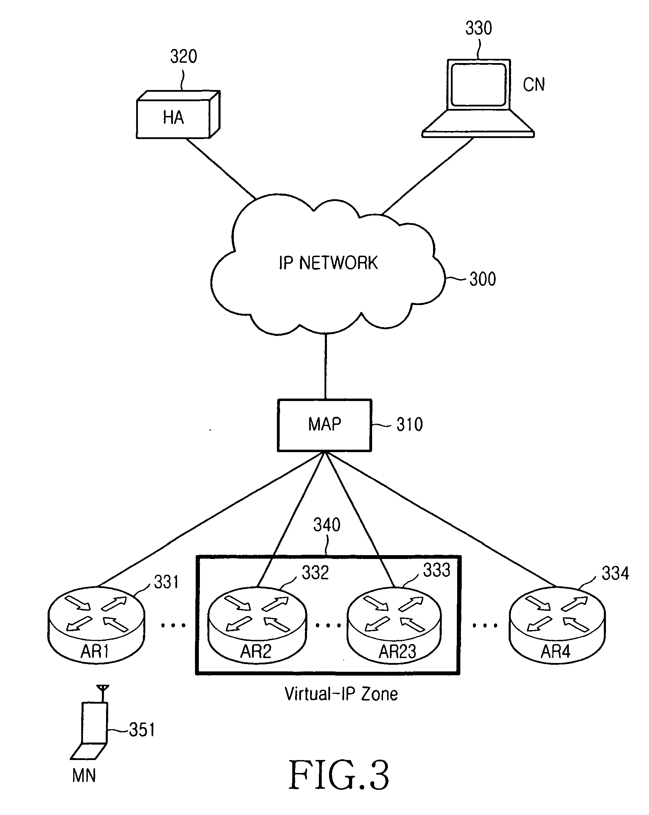

A system for virtual-IP zone assignment in a HMIPv6 system according to an embodiment of the present invention will now be described herein below. FIG. 3 is a diagram illustrating a scheme for assigning a virtual-IP zone in a HMIPv6 system according to an embodiment of the present invention. A description will now be made of an operation of each node in FIG. 3.

A HA 320 includes all or some information on a MN 351, and stores the information together with the CoA of the MN 351 and home address information. Because the system is based on the HMIPv6, the CoA of the MN 351 stored in the HA 320 becomes a regional CoA (RCoA). A CN 330, a node in communication with the MN 351, receives data from the MN 351 and/or transmits data to the MN 351. The HA 320 and the CN 330 exchange data and signals with a MAP 310 via an IP network 300.

A description will now be made of the MAP 310 and access routers 331, 332, 333 and 334. The MAP 310 can set up a virtual-IP zone state according to an embodiment of the present invention. When a MN moves to a new access router in such a virtual-IP zone, the MAP 310 processes movement updating and routs a packet of the MN to the new access router. Further, the MAP 310 manages a list of access routers constituting the virtual-IP zone. A detailed routing method performed in the MAP 310 will be described below. Each of the access routers 331, 332, 333 and 334 calculates the communication traffic and mobility of a MN, and if the calculated value is larger than a predetermined threshold reports the result to the MAP 310. Then the MAP 310 sends a virtual-IP zone forming command (or virtual-IP zone assignment command) to a corresponding access router according to the result reported by the access router. Access routers receiving the virtual-IP zone forming command from the MAP 310 advertise a virtual network prefix. The MAP 310 can form (or assign) a virtual-IP zone. Even after the formation of a virtual-IP zone, the access routers calculate the communication traffic and mobility of the MN. If the calculated value is smaller than a predetermined threshold, the access routers report the calculation result to the MAP 310. Then the MAP 310 sends a virtual-IP zone release command to a corresponding access router according to the result reported by the access router. Upon receiving the virtual-IP zone release command, the corresponding access routers advertise their original network prefix. Parameters calculated by each access router include the number of MNs and a handover rate.

The access routers 331-334 send a movement update request for a MN to the MAP 310 through a Layer 2 source trigger (L2-ST) in Virtual-IP zone state. The Layer 2 source trigger signal is used for a movement update of a MN when a virtual-IP zone is formed according to the present invention. That is, access routers that have formed a virtual-IP zone can check mobility of a MN through a Layer 2 source trigger. The access routers check the movement update of a MN through the source trigger, and inform the MAP 310 of the check result, thereby delivering the communication traffic to an access router having a corresponding MN. The movement update through the source trigger will be described in detail herein below.

A Virtual CoA (VCoA), an address according to the present invention, is a CoA to be used as the same network prefix by more than two access routers according to an embodiment of the present invention. In addition, an On-Link CoA (LCoA), as described above, is a CoA generated by a MN based on an original network prefix of the access router. Also, a regional CoA (RCoA), as described above, is a CoA generated by a MN according to MAP option information.

When a MN moves to a new access router (NAR) in a virtual-IP zone, the movement update according to the present invention generates and transmits a movement update message from an old access router (OAR) to the MAP 310 in order to generate binding for a RCoA, a VCoA, and an IP address of the NAR. The movement update detects a change in access router through Layer 2 in virtual-IP zone state, and transmits a movement update message using a Layer 2 source trigger signal. When a MN is not in a state according to the present invention, it generates a RCoA and a LCoA and transmits a BU message to the MAP 310. However, when the MN is in a state according to the present invention, it generates a BU message or a local BU message between a VCoA and a LCoA, and transmits the message to the MAP 310.

## 2. State Transition in Virtual-IP Zone Assignment Scheme

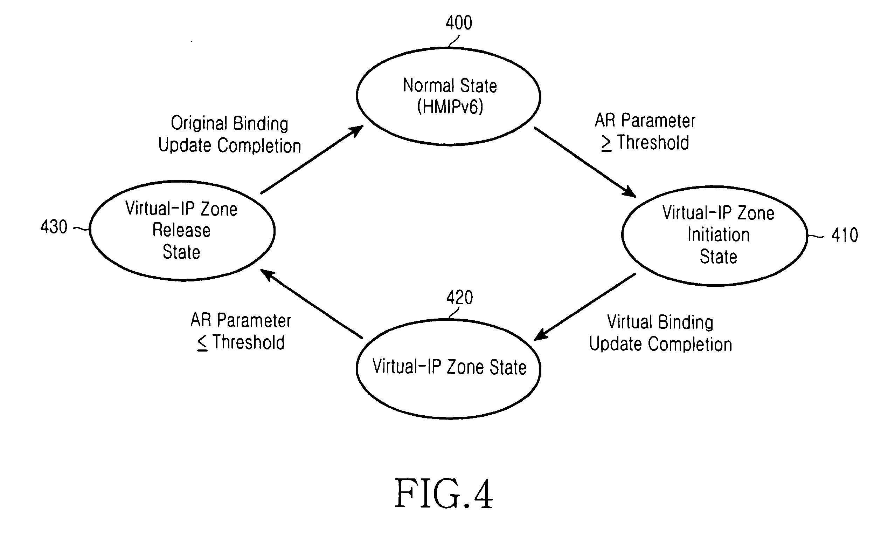

FIG. 4 is a state transition diagram for a virtual-IP zone scheme provided in an access router of a HMIPv6 system according to an embodiment of the present invention. The states illustrated in FIG. 4 are performed in an access router. The MAP 310 (FIG. 3) controls state transition such that each access router transitions to the states of FIG. 4. However, the MN is not related to an operation of forming or releasing a virtual-IP zone by an access router of a network. That is, it is used as a fundamental operation regardless of whether the access router of the network forms a virtual-IP zone.

In a virtual-IP zone assignment scheme according to an embodiment of the present invention, the following 4 states are provided. The normal state 400 refers to a state where a HMIPv6 system performs a normal operation. That is, in this state, handover is provided by a HMIPv6 system. However, in the normal state 400 according to an embodiment of the present invention, an access router checks the communication traffic and mobility of a MN located in its region. The parameters, as described above, include information on the number of MNs located in access router's region and information on a handover rate. The parameters are reported to the MAP 310 (FIG. 3). The MAP 310 compares the reported parameter with a predetermined threshold. If the reported parameter is larger than the predetermined threshold, access routers that will form a virtual-IP zone with the access router transition to a virtual-IP zone initiation state 410 in order to form a virtual-IP zone according to the present invention.

In the virtual-IP zone initiation state 410, the MAP 310 sends a virtual-IP zone forming command to a corresponding access router based on the values reported by the access routers. That is, the MAP 310 sends a virtual-IP zone forming command to access routers to be grouped (or bound) into a virtual-IP zone. Accordingly, corresponding access routers advertise a predetermined identical virtual network prefix to MNs. A MN receiving the virtual network prefix compares an original network prefix with the virtual network prefix, and generates a VCoA by itself, determining that the virtual network prefix is a new network prefix. Thereafter, the MN transmits the newly generated a VCoA to the MAP 310 using a Binding Update (BU) message, and the MAP 310 receiving the BU message newly updates binding.

If MNs receiving the same virtual network prefix from the access routers transmit a BU message to the MAP 310, completing binding update, then transition to a virtual-IP zone state 420 occurs.

In the virtual-IP zone state 420, MNs located in access routers forming a virtual-IP zone exchange data with a CN using a VCoA. Therefore, if a MN is handed over from an old access router (old AR) to a new access router (new AR) included in the virtual-IP zone, a network prefix advertised from the new access router becomes a virtual network prefix which is identical to a network prefix advertised from the old access router. As a result, the MN uses a previous VCoA without forming a new VCoA. Thus, the MN does not generate or transmit a local BU message to the MAP 310 (FIG. 3).

If the MN moves from an old access router to a new access router, movement update to the MAP 310 is performed in the old access router by a Layer 2 source trigger (L2-ST) scheme using a pilot signal. The MAP 310 performs binding update as the MN moves from the old access router to the new access router. Thereafter, the MAP 310 forwards the communication traffic, to the MN via the new access router. In the virtual-IP zone state 420, a local BU message on a wireless link is not generated because handover is performed through Layer 2 source trigger (L2-ST). That is, the source trigger is not newly generated message in the MN, but is used to transfer the existing message of the Layer 2 handoff to the MAP via access router.

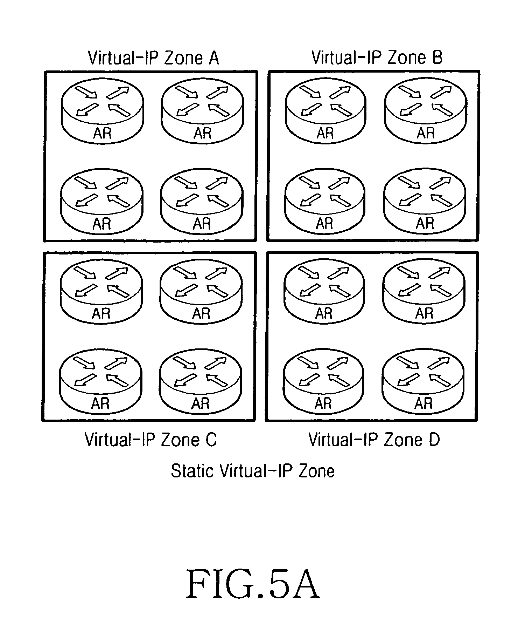

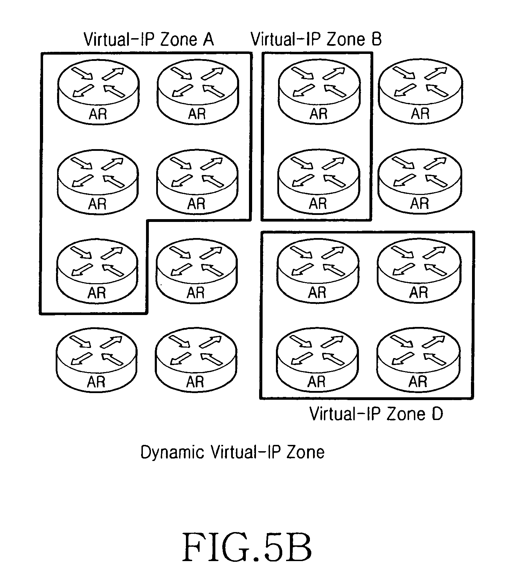

A method of grouping the access routers into virtual-IP zones will now be described with reference to FIGs. 5A and 5B. FIG. 5A is a diagram illustrating a static virtual-IP zone assignment scheme in a HMIPv6 system according to an embodiment of the present invention. FIG. 5B is a diagram illustrating a dynamic virtual-IP zone assignment scheme in a HMIPv6 system according to an embodiment of the present invention. In the static virtual-IP zone assignment scheme of FIG. 5A, particular access routers form one virtual-IP zone using previously measured statistical data. In FIG. 5A, a virtual-IP zone A, a virtual-IP zone B, a virtual-IP zone C, and a virtual-IP zone D are formed by access routers. In the dynamic virtual-IP zone assignment scheme of FIG. 5B, a virtual-IP zone is formed by determining access routers where handover frequently occurs based on the communication traffic and the handover state of a MN. Therefore, virtual-IP zones A, B, and D are different in size and can dynamically changed.

The static and the dynamic virtual-IP zone assignment schemes both have advantages and disadvantages. For example, the static virtual-IP zone assignment scheme is advantageous in that a load of a MAP that performs virtual-IP zone assignment can be reduced because a virtual-IP zone is formed using previously measured statistical data when a system is designed and access routers are installed in the field. Further, the static virtual-IP zone assignment scheme is advantageous in that access routers are easy to control because a particular virtual-IP zone remains unchanged. However, the static virtual-IP zone assignment scheme is disadvantageous in that effects of the present invention cannot be maximized because a change in field condition and mobility of actual users or MNs are not correctly considered. The dynamic virtual-IP zone assignment scheme is advantageous in that effects of the present invention can be maximized because a change in field condition and mobility of actual MNs are correctly considered. However, the dynamic virtual-IP zone assignment scheme is more complex than the static virtual-IP zone assignment scheme in terms of control because the virtual-IP zone can be dynamically changed.

Referring back to FIG. 4, in normal state 400 and the virtual-IP zone state 420, access routers continuously calculate the communication traffic and handover state of MNs and if the calculated values satisfy a particular condition report the calculated results to the MAP 310. In case of the dynamic virtual-IP zone assignment scheme of FIG. 5B, based on the report, the MAP 310 can add, change, and remove a particular router from a particular virtual-IP zone. The access routers compare the reported parameter with a predetermined threshold. If the reported parameter is smaller than or equal to the predetermined threshold, access routers that will release the virtual-IP zone with the access router make transition to a virtual-IP zone release state 430 in order to release a virtual-IP zone according to an embodiment of the present invention. Preferably, a threshold for a case where an access router transitions from the normal state 400 to the virtual-IP zone initiation state 410 is different from a threshold for a case where the access router transitions from the virtual-IP zone state 420 to the virtual-IP zone release state 430.

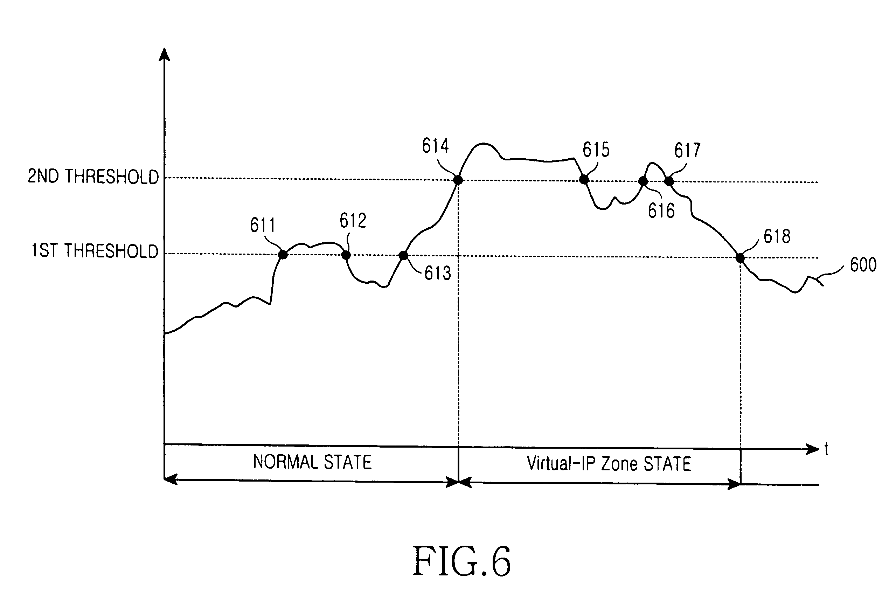

FIG. 6 is a diagram illustrating a method for setting a threshold used as a reference for forming and releasing a virtual-IP zone of access routers according to an embodiment of the present invention. In FIG. 6, an x-axis represents a time and a y-axis represents a measured parameter value for forming a virtual-IP zone. For example, a measured parameter value includes a number of MNs that is handed over from a particular access router to another access router, and/or a number of MNs that communicate under the access router. A time-varying curve 600 becomes a parameter variation curve. In an embodiment of the present invention, the threshold is classified into two thresholds of a first threshold and a second threshold. The two thresholds are used in order to prevent ping-pong virtual-IP zone assignment. This will be described herein below.

If thresholds for virtual-IP zone forming and release are equally set, an access router reports an access router state to the MAP 310 (FIG. 3) when a parameter for performing virtual-IP zone assignment becomes larger than the threshold. Then the MAP 310 will send a virtual-IP zone assignment command to the access routers. In some cases, the parameter is decreased below a threshold for virtual-IP zone assignment of the access routers soon after the access routers perform virtual-IP zone assignment. The MAP 310 again sends a virtual-IP zone release command to the access routers. Then the access routers again perform virtual-IP zone release. Because a VCoA is commonly used for virtual-IP zone assignment, MNs must perform the same operation as if handover is performed. That is, the access routers deliver a new network prefix to the MNs, and the MNs use a new CoA by receiving the new network prefix. For such an operation, wireless channel resource is used, causing power consumption in the MNs. Thereafter, if the virtual-IP zone release is performed again, access networks request the MNs to use their original network prefix. Then the MNs again perform a handover operation, and perform communication with a new CoA.

If one threshold is set for the parameter as stated above, resource waste and power loss may occur. This will be described on the assumption that only a first threshold is used in FIG. 6. The parameter variation curve 600 exceeds a first threshold for virtual-IP zone assignment at a point 611. In this case, an access router reports an access router state to a MAP 310 (FIG. 3). Therefore, the MAP 310 commands corresponding access routers to perform the virtual-IP zone assignment. Thereafter, at a point 612, the parameter variation curve 600 may become lower than the first threshold. In this case, the MAP 310 sends a virtual-IP zone release command to the access routers. Thereafter, at a point 613, the virtual-IP zone assignment is performed again. The virtual-IP zone assignment and release are repeated within a short time, efficiently reducing the system. Therefore, in an embodiment of the present invention, two thresholds are defined to prevent resource waste. As illustrated in FIG. 6, when the parameter variation curve 600 exceeds the second threshold, a transition occurs from the normal state 400 to the virtual-IP zone initiation state 410. If the parameter variation curve 600 becomes lower than the first threshold, a transition occurs again from the virtual-IP zone state 420 (FIG. 4) to the virtual-IP zone release state 430 (FIG. 4).

Herein, a description of the present invention has been made on the assumption that only the first threshold is used. However, even when only the second threshold is used, the ping-pong virtual-IP zone assignment phenomenon may occur at points 614, 615, 616 and 617. In FIG. 6, the second threshold for transition from the normal state 400 (FIG. 4) to the virtual-IP zone initiation state 410 (FIG. 4) is set higher than the first threshold for transition from the virtual-IP zone state 420 to the virtual-IP zone release state 430. Alternatively, however, the first threshold may be set higher than the second threshold.

The threshold may include a time in addition to a threshold for a parameter. For example, even though the parameter variation curve reaches a threshold for the virtual-IP zone release for a predetermined time after the virtual-IP zone assignment, the virtual-IP zone release is not performed. Virtual-IP zone assignment may not be performed for a predetermined time after the virtual-IP zone release .When time is used as another parameter for the virtual-IP zone assignment and release, one threshold can be used for the parameter. This is to prevent the ping-pong virtual-IP zone assignment. Therefore, it is preferable that the time used as another parameter for the virtual-IP zone assignment and release should be set to a time where a ping-pong virtual-IP zone assignment operation cannot be performed or a time where a reduction in efficiency of channel resource can be prevented, using a statistical method. However, if there is no possibility that the ping-pong virtual-IP zone assignment will occur, it is not necessary to define two thresholds or use the time as a parameter for virtual-IP zone assignment and release.

3. Dynamic/Static Virtual-IP Zone Assignment and Release Condition

First, a dynamic virtual-IP zone assignment and release condition will be described. Access routers according to the present invention check a loading status (LS) and a movement status (MS). The loading status and the movement status checked by the access routers can become parameters according to the present invention. The loading status can become the number of MNs located in a cell region of each of the access routers, or a load requested by the MNs. This is denoted by numMN(i), which means the number of MNs in a cell #i and/or a load. The movement status is achieved by checking the number of handovers performed by MNs located in a cell region of an access router. Therefore, the movement status can be acquired by tracing the number of MNs that perform handover to a particular cell for a predetermined time. By checking the number of handovers, an access router can calculate probability that all MNs located in its cell region will perform handover within a predetermined time. The probability can be calculated by Equation (1):

$$P_{i,j} = \frac{num\ HO(i, j)}{\sum\limits_{k \in Neigh(i)} num\ HO(i, k)} \qquad \cdots \cdots \cdots \cdots (1)$$

In Equation (1), $P_{i,j}$ denotes movement probability from a cell #i to a cell #j, 'num HO(i,j)' denotes the number of MNs handed over from a cell #i to the cell #j for a predetermined time. The a denominator of Equation (1) denotes the total number of MNs handed over to neighbor cells of the cell #i. It can be understood from Equation (1) that each access router determines a target cell region to which it has performed handover from its own cell region. This is to calculate probability for mobility of a MN and a movement path of a MN for a time where the entire check is performed. Therefore, when a MN moves from its own cell to a cell of a particular access router, the access router should store a movement status value in the form of Equation (2) presented below.

$$P(i) = (a,\ Pia),\ (b,\ Pib),\ (c,\ Pic),\ (d,\ Pid),\ \cdots \qquad \cdots \cdots \cdots \cdots (2)$$

In Equation (2), 'a', 'b', 'c' and 'd' denote neighboring access routers of an access router #i. P(i) denotes a handover probability value, and the handover probability value includes a movement probability to an access router a, a movement probability to an access router b, a movement probability to an access router c, and a movement probability to an access router d.

The access routers report the checked values to the MAP 310 (FIG. 3) in order to perform virtual-IP zone assignment or virtual-IP zone release. The report time can be divided into a time for a case where the access router has the threshold described in connection with FIG. 6, and a time for a case where the access router does not have the threshold described in connection with FIG. 6. Describing the case where the access router has the threshold described in connection with FIG. 6, assuming that a current state is the normal state 400 (FIG. 4), if the parameter exceeds a threshold for transition to the virtual-IP zone initiation state 410 (FIG. 4), the respective access routers report this to the MAP. Otherwise, assuming that the current state is the virtual-IP zone state 420 (FIG. 4), if the parameter becomes lower than a threshold for transition to the virtual-IP zone release state 430, the access routers report this to the MAP.

Referring to FIG. 6, assuming that the current state is the normal state 400, if the parameter is higher than the second threshold, the access router reports this to the MAP 310. Assuming that the current state is the virtual-IP zone state 420, if the parameter becomes lower than the first threshold, the access router reports this to the MAP 310. Therefore, when more than two thresholds are used as described above with reference to FIG. 6, each access router using Equation (3) below to calculate whether transition from the normal state 400 to the virtual-IP zone initiation state 410 is necessary, and using Equation (4) below to calculate whether transition from the virtual-IP zone state 420 to the virtual-IP zone release state 430 is necessary.

$$\text{numHO}(i) \geq \text{MS\_Th}(2) \text{ and } \text{numMN}(i) \geq \text{LS\_Th}(2) \quad \dots\dots\dots (3)$$

where MS_Th(2) denotes a second threshold in the movement status, and LS_Th(2) denotes a second threshold in the loading status.

$$\text{numHO}(i) \geq \text{MS\_Th}(1) \text{ and } \text{numMN}(i) \geq \text{LS\_Th}(1) \quad \dots\dots\dots (4)$$

where MS_Th(1) denotes a first threshold in the movement status, and LS_Th(1) denotes a first threshold in the loading status.

So far, the dynamic virtual-IP zone assignment and release condition has been described. As to the static virtual-IP zone assignment and release condition, if a corresponding condition is satisfied using previously calculated statistical data, virtual-IP zone assignment can be performed. For example, in a particular region such as a university campus, virtual-IP zone assignment is performed on a region in the campus from a campus opening time to a campus closing time, and after the campus closing time, virtual-IP zone release is performed. In case of the amusement center, a time when people crowd is statistically calculated, and virtual-IP zone assignment and release are performed according to the calculated statistical data. By using the static virtual-IP zone assignment scheme, it is possible to reduce a calculation load that must be calculated in each access router and a calculation load in the MAP 310.

4. General Algorithm for Virtual-IP Zone Assignment and Release

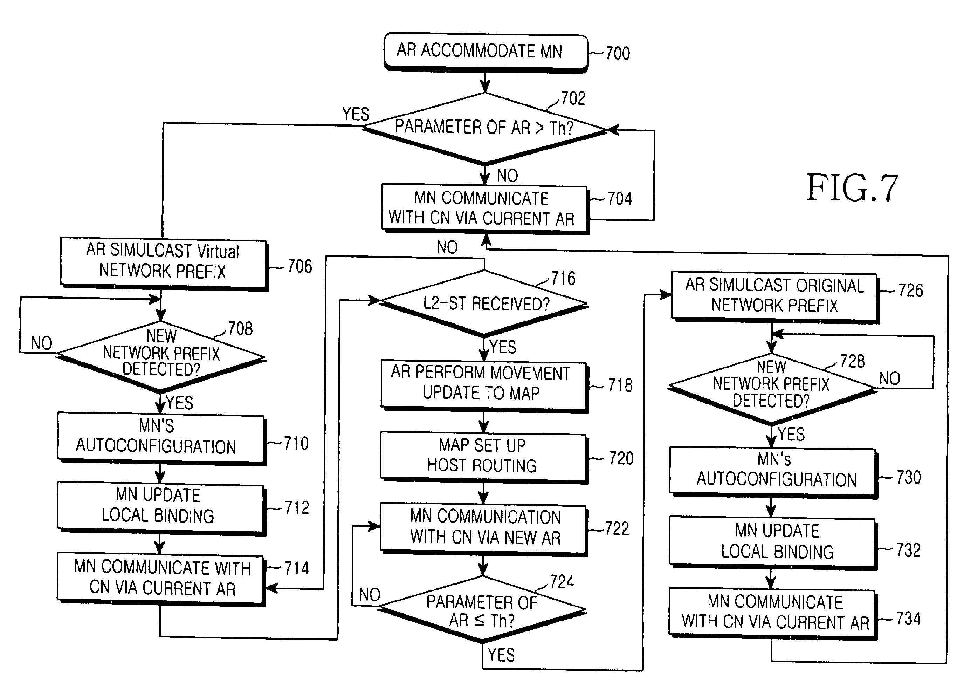

A general algorithm for virtual-IP zone assignment and release will be described herein below with reference to FIG. 7. FIG. 7 is a flowchart illustrating a method for performing virtual-IP zone assignment according to an embodiment of the present invention. Referring to FIG. 7, in step 700, an access router accommodates a MN. That is, a normal MN located in a cell area of the access router communicates with the access router. The access router in communication with the MN determines, in step 702, whether movement status and loading status values are larger than a predetermined threshold. If the monitored vales are reported to its MAP 310 (FIG. 3) or larger than the threshold, i.e., if state transition is required, the access router can transmit a state transition request message to the MAP 310. In the following description, it is assumed that the access router reports a state transition request to the MAP 310. That is, in a normal state, if the parameter is larger than a second threshold, as described in connection with FIG. 6, the access router generates a transition request signal to a virtual-IP zone and reports the transition request signal to the MAP 310. In a virtual-IP zone state, if the parameter becomes lower than a first threshold of FIG. 6, the access router reports a virtual-IP zone release request message to the MAP 310.

If it is determined in step 702 that the status value of the access router is larger than the threshold, the access router proceeds to step 706, and otherwise, the access router proceeds to step 704. In step 704, the access router performs a general operation in the normal state. That is, in this state, the MN communicates with a CN via an access router in which it is currently included. Therefore, the MN performs communication using a RCoA and a LCoA required in a HMIPv6 system. Further, in this state, the MN can perform handover based on a HMIPv6 protocol.

However, in step 706, the access router simulcasts a virtual network prefix in response to a virtual-IP zone assignment command from the MAP 310 (FIG. 3) after a status report to the MAP 310. In FIG. 7, a process of making a status report to the MAP 310 by the access router and a process of delivering a virtual-IP zone assignment command to the access router by the MAP 310 are not illustrated. In FIG. 7, after such processes, only a process of simulcasting a virtual network prefix for virtual-IP zone forming in the access router is illustrated. Based on the simulcasted virtual network prefix, in step 708 the MN determines whether a new network prefix is detected. If a new network prefix is detected from the access router, the MN proceeds to step 710, where a general handover operation is performed. Therefore, in step 710, the MN performs auto-configuration in order to perform a handover operation.

Thereafter, the MN processing proceeds to step 712 where it generates a local Binding Update (BU) message and sends it to the MAP 310. Then the MAP 310 updates the VCoA of the MN in the virtual-IP zone state. If the VCoA of the MN is updated, in step 714 the access router and the MN continue to communicate with an existing CN. That is, when the VCoA of the MN is updated, the static and dynamic virtual-IP zones are formed as shown in FIGs. 5A and 5B. In this state, particular access routers where handover frequently occurs are grouped into one virtual-IP zone. Therefore, the MN determines whether the access router is changed through a pilot signal received, while communicating with the CN via a corresponding access router. That is, the MN, while it is on the move, detects a pilot signal periodically broadcasted from an access point (AP) of a new access router. If a new pilot signal is detected, the MN detects an identifier (ID) of a new access point included in the pilot signal information, and delivers the detected ID to an old access router. The above-described procedures are not new procedures, but the procedures performed in the handover operation of Layer 2. Thus, there is no newly added signaling to detect a change in access router.

The access point has mapping information for an IP address for a neighbor access router and a Layer 2 ID of the access point, previously stored therein. This is a Layer 2 source trigger (L2-ST). Thus, an old access router maps an ID of a new access point, which is information included in a received Layer 2 source trigger, to an IP address of a new access router. By performing such a Layer 2 handover procedure, an old access router detects an IP address of a new access router to which the MN moves.

As described above, the reason for determining Layer 2 source trigger signals by an access router is that different access routers are grouped into one virtual-IP zone. That is, because the access routers simulcast the same virtual network prefix and only the Layer 2 signals are different, MNs can detect a change in access router by detecting the Layer 2 signals. The MNs inform a corresponding access router of the change in access router through a Layer 2 source trigger signal. In the virtual-IP zone state, there is no change in network prefix. Therefore transmitting the Layer 2 source trigger signal to the access router by the MN is performed because the MAP 310 should know the movement of the MN in order to deliver data to a correct access router.

Referring back to FIG. 7, if it is determined in step 716 that a Layer 2 source trigger signal is received from the MN, the access router proceeds to step 718. However, if the Layer 2 source trigger signal is not received, the operation in step 714 is repeated. That is, the MN continuously communicates with the CN via a corresponding access router.

Upon receiving the Layer 2 source trigger signal, the access router proceeds to step 718 where it transfers movement update on the corresponding MN to the MAP. That is, the old access router informs the MAP 310 (FIG. 3) that a particular MN has moved from a current access router to another access router. By informing movement of an access router, the MAP can transmit data to a new access router where the MN is located. That is, in step 720, the MAP 310 performs host routing setup. Thereafter, in step 722, the MN communicates with the CN via the new access router.

A description of an operation in which the MN moves from a region of access routers grouped into a virtual-IP zone to an access router not included in the virtual-IP zone has not been made in FIG. 7. The reason is because in this case, a general HMIPv6 operation is performed. That is, the MN performs binding update to the MAP after generating a new LCoA because a network prefix for the virtual-IP zone is different from a network prefix for a non-virtual-IP zone.

After step 722, the MN communicates with the CN via the corresponding access router. The access router continuously checks the parameters even while performing communication after forming the virtual-IP zone. The access router determines whether the parameter becomes lower than a threshold. If it is determined in step 724 that the parameter checked by the access router becomes lower than a predetermined threshold, the access router proceeds to step 726. Otherwise, the access router returns to step 722 where it continuously performs communication.

In step 726, as the access router receives a request command for an original network prefix from the MAP 310 (FIG. 3), it advertises the original network prefix. Then the MN determines in step 728 whether a new network prefix is detected. If a new network prefix is detected, the MN proceeds to step 730. However, if a new network prefix is not detected, the MN repeats the operation in step 728. The original network prefix is broadcasted to release the virtual-IP zone.

In step 730, the MN performs an auto-configuration. That is, the MN receives the new network prefix broadcasted by the access router, and newly configures its by IP class. Thereafter, in step 732, the MN generates a local BU message and sends it to the corresponding access router, completing a virtual-IP zone release operation. After completion of the virtual-IP zone release operation, the MN continuously communicates with the CN in normal state 400 via the current access router where it is located, in step 734.

**Virtual-IP Zone Assignment And Release Performed In MAP**

1. Operation of Moving MN in Normal State

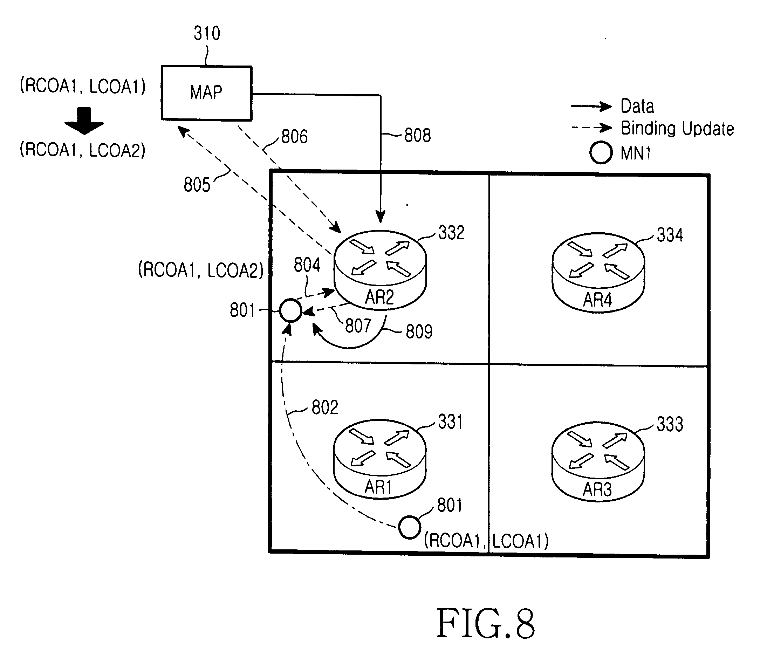

FIG. 8 is a diagram illustrating an operation of a moving MN in a normal state in a HMIPv6 system. The system uses the same reference numerals as the system illustrated in FIG. 3 are used here. A first access router 331, a second access router 332, a third access router 333, and a fourth access router 334 have their own regions. The access routers 331, 332, 333, and 334 are connected under a MAP 310. Further, the access routers 331, 332, 333, and 334 are in a normal state where they are not grouped. In the normal state, if a MN 801 generates in to a region of the first access router 331, the MN 801 generates a LCoA according to a network prefix broadcasted by the first access router and a RCoA according to MAP information. Herein, the LCoA and the RCoA acquired from the first access router 331 are denoted by LCoA and RCoA 1, respectively.

In some cases, the MN 801 located under the first access router 331 may move to a region of the second access router 332. For example, if the MN 801 moves to the region of the second access router 332 as shown by an arrow 802 of FIG. 8, the MN 801 receives a network prefix broadcasted by the second access router 332. Because MAP information received from the first access router 331 is identical to MAP information received from the second access router 332, the same RCoA is used. However, because a network prefix received from the second access router 332 is different from a network prefix received from the first access router 331, the MN 801 updates LCoA1 to LCoA2. Thereafter, the MN 801 generates a local BU message using the updated LCoA2 and the existing RCoA1, and sends the local BU message to the second access router 332 as indicated by arrow 804. Then the second access router 332 forwards the local BU message received from the MN 801 to the MAP 310 as indicated by arrow805. The MAP 310 then updates RCoA1 and LCoA1 to RCoA1 and LCoA2.

The MAP 310 generates an acknowledgement (Ack) message for update and transmits the Ack message to the second access router 332 as indicated by arrow806. Then the second access router 332 transmits a Local Binding Ack message to the MN 801 as indicated by arrow807. Thereafter, if MAP 310 received the data transmitted from a network to the MN 801, the MAP 310 transmits the data to the MN 801 via the second access router 332 as indicated by arrows 808 and 809. Such an operation in the normal state is identical to a handover operation in the general HMIPv6 state.

2. Registration of MN in Virtual-IP Zone Initiation State

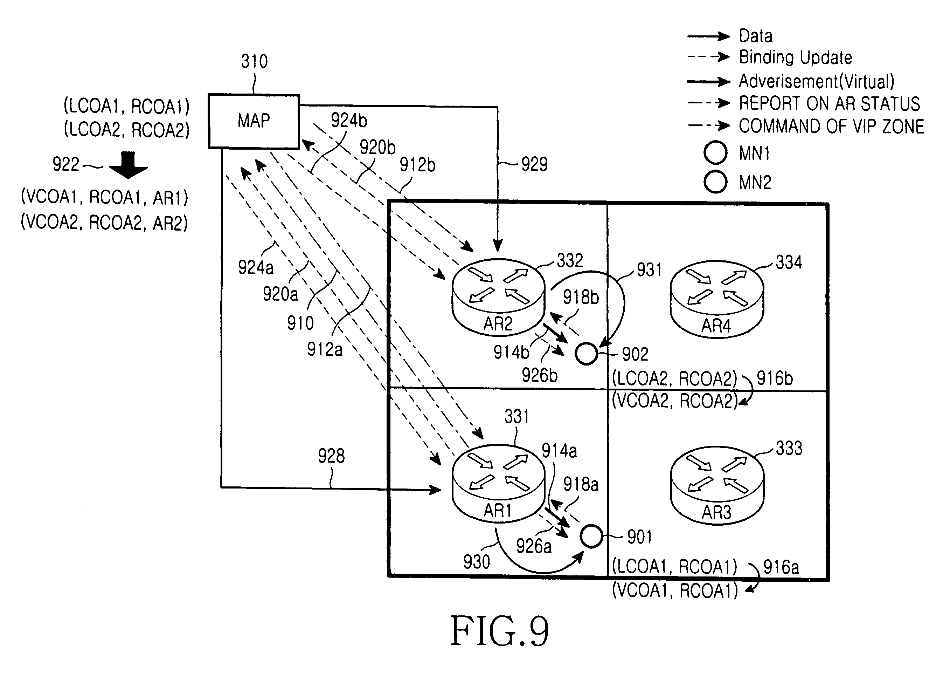

FIG. 9 is a diagram illustrating a process of forming a virtual-IP zone by access routers in a virtual-IP zone initiation state according to an embodiment of the present invention. With reference to FIG. 9, a description will now be made of a process of performing a new VCoA registration for a MN as access routers in a virtual-IP zone initiation state form a virtual-IP zone according to an embodiment of the present invention, and a process of transmitting data to the MN after the registration. For example, in FIG. 9, a first access router 331 and a second access router 332 are grouped into a virtual-IP zone.

A first MN 901 is located in a region of the first access router 331, and a second MN 902 is located in a region of the second access router 332. The first MN 901 generates LCoA1 and RCoA1 by receiving a network prefix broadcasted by the first access router 331 and information on the MAP 310, and delivers LCoA1 and RCoA1 to the MAP 310 via the first access router 331. Thus, the first MN 901 and the MAP 310 both store LCoA1 and RCoA1. Also, the second MN 902 generates LCoA2 and RCoA2 by receiving a network prefix broadcasted by the second access router 332 and information on the MAP 310, and delivers LCoA2 and RCoA2 to the MAP 310 via the second access router 332. Thus, the second MN 902 and the MAP 310 both store LCoA2 and RCoA2.

In some cases, in both or one of the first access router 331 and the second access router 332, the above-described parameter may exceed a threshold for forming a virtual-IP zone. For example, in FIG. 9, a report message for forming a virtual-IP zone is transmitted from the first access router 331 to the MAP 310. If the first access router 331 transmits a report message for forming a virtual-IP zone to the MAP 310 as indicated by arrow 910, the MAP 310 sends a virtual-IP zone forming command to the first access router 331 and the second access router 332 as indicated by arrows912a and 912b in order to form a virtual-IP zone for the first access router 331 and the second access router 332. In response, the first access router 331 and the second access router 332 simulcast the same virtual network prefix in order to form a virtual-IP zone as indicated by arrow 914 a, b..

The first MN 901 and the second MN 902 receiving the new virtual network prefix update their LCoAs to VCoAs as indicated by arrows 916a and 916b, respectively. That is, the first MN 901 updates LCoA1 to VCoA1 as indicated by arrow 916a, and the second MN 902 updates LCoA2 to VCoA2 as indicated by arrow 916b. The first MN 901 and the second MN 902 represent MNs included in regions of the first access router 331 and the second access router 332, respectively. Therefore, all MNs located in a region of the first access router 331 are equal in operation to the first MN 901. Also, all MNs located in a region of the second access router 332 are equal in operation to the second MN 902.

After updating their addresses, the first MN 901 and the second MN 902 generate local BU messages using their updated addresses as indicated by arrows 918a and 918b, and send the local BU messages to the MAP 310 via the first access router 331 and the second access router 332 as indicated by arrows 920a and 920b, respectively. If a new VCoA for the first MN 901 is received, the MAP 310 stores a VCoA, a RCoA and an address of the first access router 331 to which it belongs as indicated by arrow 922. That is, information on the first MN 901, stored in the MAP 310 before a virtual-IP zone is formed, are LCoA1, RCoA1 and an address of the first access router 331, and information on the first MN 901, stored in the MAP 310 after the virtual-IP zone is formed, are VCoA1, RCoA1, and an address of the first access router 331. Also, information on the second MN 902, stored in the MAP 310 before a virtual-IP zone is formed, are LCoA2, RCoA2 and an address of the second access router 332, and information on the second MN 902, stored in the MAP 310 after the virtual-IP zone is formed, are VCoA2, RCoA2, and an address of the second access router 332.

The MAP 310 storing such addresses therein transmits Local Binding Ack messages to the first access router 331 and the second access router 332 as indicated by arrows 924a and 924b. In response, the first access router 331 and the second access router 332 transmit the Local Binding Ack messages to the first MN 901 and the second MN 902 as indicated by arrows 926a and 926b, respectively, completing an operation of forming a virtual-IP zone for access routers.

A description will now be made of an operation in which the MAP 310 receives data to be transmitted to the first MN 901 and the second MN 902 after forming the virtual-IP zone. The description will be made on the assumption that the MAP 310 receives data to be transmitted to the first MN 901. If data to be transmitted to the first MN 901 is received, the MAP 310 can determine that the MN 901 is located in an address of the first access router 331, by checking the data stored as indicated by arrow 922. That is, the MAP 310 can determine that the first MN 901 is located in a region of the first access router 331. As indicated by arrow 928, the MAP 310 transmits data to be transmitted to the first MN 901, to the first MN 901 having an address VCoA via the first access router 331. In this way, the data transmission and reception is performed. The MAP 302 transmits data to the second MN 902 in the same manner as above. That is, when there occurs data to be transmitted to the second MN 902 in the MAP 310, the MAP 310 transmits the data to the second access router 332 in step 929. Then, the second access router 332 transmits the received data to the second MN 902 in step 931.

3. Operation of Moving MN in Virtual-IP Zone State

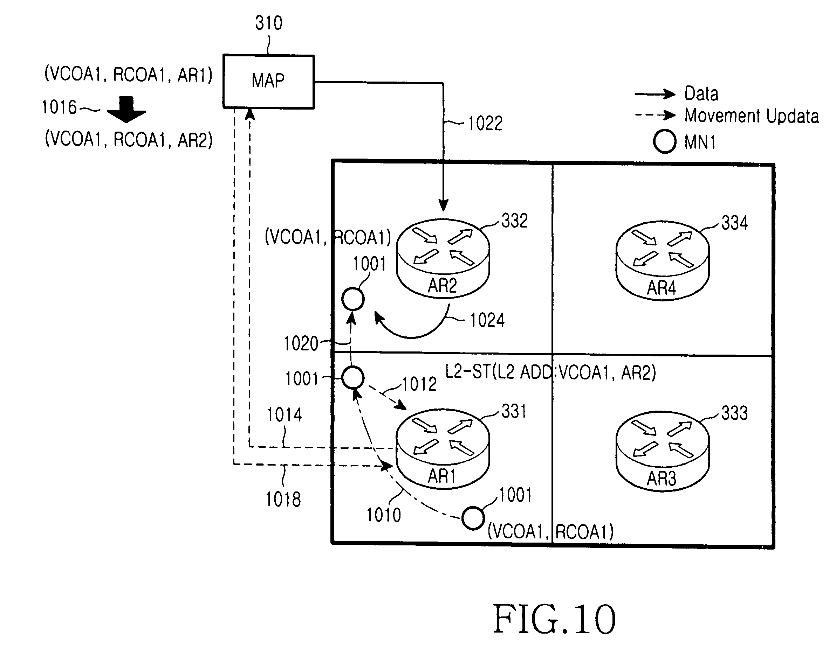

FIG. 10 is a diagram illustrating operation of a moving MN in a virtual-IP zone state according to an embodiment of the present invention. It is assumed that a first access router 331 and a second access router 332 are grouped into a virtual-IP zone.

A MN 1001 is located in a region of the first access router 331. In this state, the MN 1001 has VCoA1 and RCoA1 according to an embodiment of the present invention. When the MN 1001 moves from the second access router 332 to a region where a high-power pilot signal can be received as indicated by arrow 1010, the MN 1001 transmits a Layer 2 source trigger signal to the first access router 331. That is, there is no change in network prefix, but an ID of a second access point, included in the pilot signal, is changed. Actually, such situations take place in a region where handover occurs. Generally, the MN 1001 transmits a Layer 2 source trigger signal in a situation where handover of a MN occurs. In this manner, handover of Layer 2 is performed. The MN 1001 informs the first access router 331 that a high-power pilot signal is received from the second access router 332.

The first access router 331 receiving the Layer 2 source trigger signal generates a Movement Update message and sends the Movement Update message to the MAP 310 as indicated by arrow 1014. The Movement Update message is used to indicate that the MN 1001 moves to the second access router 332. The MAP 310 has addresses of VCoA1, RCoA1 and an address of the first access router 331 for the first MN 1001. As described above, VCoA1 is an address generated based on a virtual network prefix according to an embodiment of the present invention, and RCoA1 is an address generated from a MAP option transmitted by the first access router 331. The MAP 310 stores an address of a corresponding access router in order to indicate in which access router the MN 1001 is located among access routers constituting a virtual-IP zone. That is, an address of the first access router 331 becomes an address of an access router where the MN 1001 is located. In this process, the MN 1001 is not required to update a new address using a network prefix. Therefore, the MN can freely move even without performing local biding update in a wireless channel.

An address stored in the MAP 310 is updated to VCoA 1, RCoA and an address of a second access router AR2 when a Movement Update signal is received. Thereafter, as indicated by arrow 1018, the MAP 310 sends a Mobility Ack signal to the first access router 331. As indicated by arrow 1020, the MN 1001 moves to a region of the second access router 332. When data transmitted to the MN 1001 is received at the MAP 310, the MAP 310 can determine a location of the MN 1001 through the above-stated process. As indicated by arrow 1022, the MAP 310 sends the received data to the second access router 332. As indicated by arrow 1024, the second access router 332 can send the data to the MN 1001. In this way, the data transmission and reception is performed.

4. Virtual-IP Zone Release Process in Virtual-IP Zone Release State

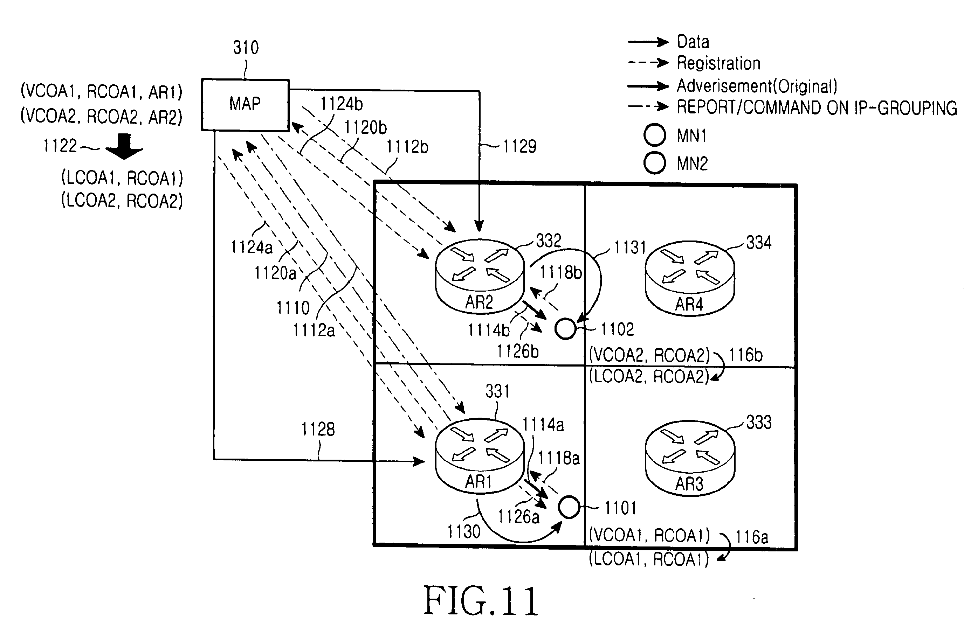

FIG. 11 is a diagram illustrating a process of releasing a virtual-IP zone by access routers in a virtual-IP zone release state according to an embodiment of the present invention. With reference to FIG. 11, a description will now be made of a process of performing original LCoA registration by a MN by releasing a virtual-IP zone in a virtual-IP zone release state according to an embodiment of the present invention, and a process of transmitting data to a MN after the registration. A process of releasing a first access router 331 and a second access router 332 from a virtual-IP zone will be described by way of example.

A first MN 1101 located in a region of the first access router 331 and a second MN 1102 located in a region of the second access router 332 have the VCoA and VCoA2 repectively based on the same virtual network prefix. That is, the first MN 1101 has VCoA1 and RCoA1, and the second MN 1102 has VCoA2 and RCoA2. The MAP 310 has VCoA1, RCoA1, and AR 1 as addresses for the first MN 1101, and VCoA2, RCoA2, and AR2 as addresses for the second MN 1102. In some cases, as described above, a state value in the first access router 331 or the second access router 332 becomes lower than a threshold for releasing a virtual-IP zone. For example, in FIG. 11, the first access router 331 transmits a report message for releasing a virtual-IP zone to the MAP 310.

If the report message for releasing a virtual-IP zone is received as indicated by arrow 1110, the MAP 310 generates a virtual-IP zone release command message and transmits the virtual-IP zone release command message to the first access router 331 and the second access router 332 as indicated by arrows 1112a and 1112b. The MAP 310 performs multicasting using an original network prefix possessed by each access router. Accordingly, the first access router 331 and the second access router 332 simulcast their original network prefixes and MAP option information as indicated by arrows 1114a and 1114b, respectively.

When the simulcast signal is received, the first MN 1101 and the second MN 1102 generate new LCoAs. That is, as indicated by arrow 1116a, the first MN 1101 updates VCoA1 and RCoA1 to LCoA1 and RCoA1 according to an original network prefix simulcasted by the first access router 331 and MAP option information. Similarly, as indicated by arrow 1116b, the second MN 1102 updates VCoA2 and RCoA2 to LCoA2 and RCoA2 according to an original network prefix simulcasted by the second access router 332 and the MAP option information. After updating the LCoA and the RCoA according to new network prefixes, the MNs report the update results to the MAP 310. That is, as indicated by arrows 1118a and 1120a, the first MN 1101 makes the report to the MAP 310 via the first access router 331. As indicated by arrows 1118b and 1120b, the second MN 1102 provides the report to the MAP 310 via the second access router 332. As indicated by arrow 1122, the MAP 310 updates previous addresses for the MNs. That is, as indicated by arrow 1122, the MAP 310 updates VCoA1, RCoA1 and an address of AR1, stored for the first MN 1101, to LCoA1 and RCoA1, and updates VCoA2, RCoA2 and an address of AR2, stored for the second MN 1102, to LCoA2 and RCoA2. After updating the addresses, the MAP 310 sends a Local Binding Update Ack message to the first access router 331 and the second access router 332 as indicated by arrows 1124a and 1124b.

As indicated by arrow 1126a, the first access router 331 sends a Local Binding Update Ack message to the first MN 1101. As indicated by arrow 1126b, the second access router 332 sends a Local Binding Update Ack message to the second MN 1102. In this way, the virtual-IP zone release is performed.

Thereafter, if data to be transmitted to the first MN 1101 is received, the MAP 310 checks the addresses updated as indicated by arrow 1122. As indicated by arrow 1128, the MAP 310 forwards the data to the first access router 331 according to the checked addresses. As indicated by arrow 1130, the first access router 331 forwards data received from the MAP 310 to the first MN 1101. Also, the MAP 310 receives data to be transmitted to the second MN 1102 in the same manner as above. That is, upon receiving data to be transmitted to the second MN 1102, the MAP 310 checks the addresses updated in step 1129. Then, the MAP 310 transmits the received data to the second access router 332 according to the checked addresses in the step 1129. The second access router 332 transmits data received from the MAP 310 to the second MN 1102 in the step 1131.

**Effects of Virtual-IP Zone Assignment According to the Present Invention**

Herein, a signaling cost in a wireless channel for a virtual-IP zone assignment scheme using a particular model is analyzed in order to describe effects of the virtual-IP zone according to an embodiment of the present invention. Herein, effects of the virtual-IP zone assignment according to an embodiment of the present invention will be described through a method using a fluid flow model used in analyzing an issue related cell boundary crossing.

1. Mobility Modeling Using Fluid Flow Model

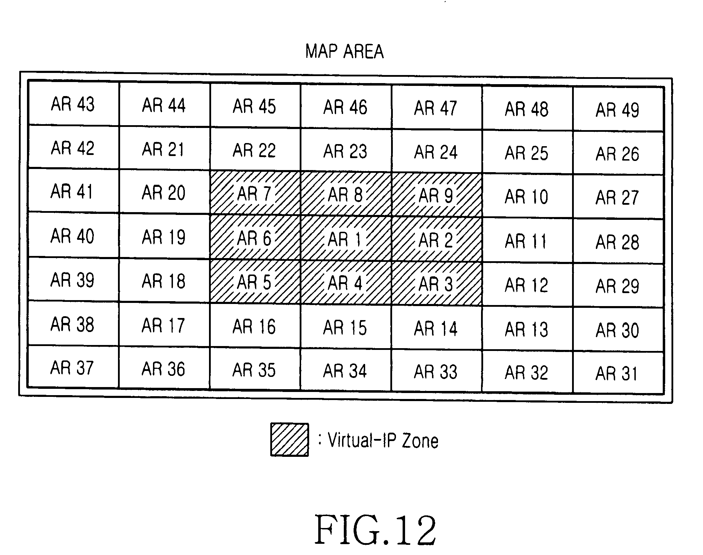

FIG. 12 is a diagram illustrating a network for verifying mobility modeling of a virtual-IP zone assignment scheme according to an embodiment of the present invention. The network of FIG. 12 is a HMIPv6-based network in which a plurality of access routers are located in one MAP area. It is assumed herein that the access routers of FIG. 12 are arranged in one MAP area. In addition, it is assumed that a virtual-IP zone comprised of the access routers is square-shaped. The access routers have their own regions, and more than two access routers constitute one virtual-IP zone according to an embodiment of the present invention. For example, in FIG. 12, we assume that first to ninth access routers AR1 to AR9 form one virtual-IP zone. Further, it is assumed that all MNs located in each of the access routers have completed a power-up registration procedure. In fluid flow mode, the direction of an MN's movement is uniformly distributed on $[0, 2\pi]$, and density of MNs moving at an average velocity v is uniformly distributed in the MAP area. An indicator Ra that a MN will cross a boundary of access routers, i.e., move from one access router to another access router can be defined as Equation (5). An indicator Rg that a MN will cross a virtual-IP zone can be defined as Equation (6).

$$Ra = \frac{\rho v l}{\pi} (mobiles / \sec) \qquad \dots \dots \dots (5)$$

In Equation (5), $\rho$ denotes mobile density (mobiles/m$^2$), v denotes moving velocity (m/sec), and *l* denotes perimeter (m) of an access router.

$$Rg = \frac{\rho v L}{\pi} \qquad \dots \dots \dots (6)$$

In Equation (6), L denotes perimeter of a virtual-IP zone, and a relation between *l* and L is set forth in Equation (7):

$$L = l\sqrt{N} \qquad \dots \dots \dots (7)$$

In Equation (7), N denotes the number of access routers.
In FIG. 12, because the number of access routers is 49, a relation between the number of access routers in a normal state in the MAP region and the number of access routers in a virtual-IP zone state becomes Equation (8):

$$1 \leq Nn \leq 49 \text{ (where } Nn \leq 49) \qquad \dots \dots \dots (8)$$

In Equation (8), Nn denotes the number of access routers in normal state.
Parameters used in Equation (5) to Equation (8), default values for analysis results to be described below, and variable values therefor are illustrated in Table 1.

Table 1

| Parameter | Meaning | Default value | Variable value |
|---|---|---|---|
| v | Average velocity of MN | 10km/hr | 100km/hr ~ 100km/hr |
| $\rho$ | Density of MNs | 0.0002MNs/m$^2$ | - |
| *l* | Perimeter of AR | 2km | - |
| L | Perimeter of virtual-IP zone | 6km | 2km, 4km, 6km, 8km, 10km, 12km, 14km |
| Ng | No. of ARs in virtual-IP zone | 9 | 4, 9, 16, 25, 36, 49 |
| T(Life) | Renewal period | 10min = 600sec | - |
| Mb | Binding Update Request/Ack message | 2msgs/mobile | - |
| Mr | Renewal Request message | 1 msg/mobile | - |

A description will now be made of a formula for a wireless signaling cost. A wireless signaling cost Cn in a HMIPv6 can be defined as Equation (9):

$$C n = [R a * N n] * M b + [\rho (\frac{\ell}{4})^2 N n * R r] * M r$$

$$= [(\rho v \ell / \pi) * N n] * M b + [\rho (\frac{\ell}{4})^2 N n \frac{1}{T (life)}] * M r$$

$$[\text{msgs/sec}] \quad \ldots \ldots (9)$$

In Equation (9), first term defines a wireless signaling cost due to binding update and second term formula defines a wireless signaling cost due to renewal registration refresh. In addition, a wireless signaling cost Cg in a virtual-IP zone state can be calculated according to Equation (10):

$$Cg = [R a * N n] * M b + [\rho (\frac{l}{4})^2 N n * R r] * M r - [R a * N g - R g] * M r$$

$$= [(\rho v l / \pi) * N n] * M b + [\rho (\frac{l}{4})^2 N n \frac{1}{T(life)}] * M r - [(\rho v l / \pi) * N g - (\rho v L / \pi)] * M b$$

$$[\text{msgs/sec}]. \ldots \ldots \ldots (10)$$

In Equation (10), the first and second term defines the total cost of HMIPv6, and the third term defines the cost that is produces during the handoff between ARs within the same VIP zone.

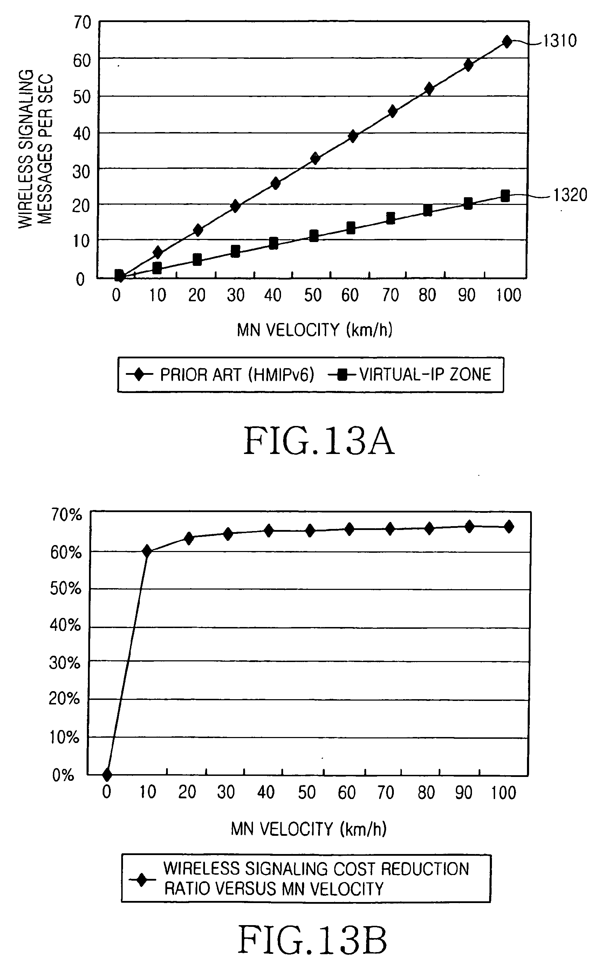

A relation between a wireless signaling cost and velocity of a MN through the analysis will be described with reference to FIGs. 13A and 13B. FIGs. 13A and 13B are graphs illustrating analysis results on a wireless signaling cost and velocity of a MN. That is, in a default value of Table 1, only the value v is changed from 10km/hr to 100km/hr, in order to show effects of velocity of a MN for a wireless signaling cost in a virtual-IP zone.

FIG. 13A illustrates a relationship curve 1310 of a wireless signaling message produced by the velocity of an MN when a normal state is maintained in a conventional HMIPv6 system, and a relation curve 1320 of a wireless signaling message between mobility of a MN and mobility of a MN when a virtual-IP zone is formed according to an embodiment of the present invention. It can be understood from FIGs. 13A and 13B that when a virtual-IP zone is formed according to an embodiment of the present invention, as mobility of a MN increases, the amount of a wireless signaling message is remarkably reduced, as compared with when the conventional technology (HMIPv6) is used.

FIG. 13B is a graph illustrating a wireless signaling reduction ratio on a virtual-IP zone assignment scheme according to an embodiment of the present invention and the conventional technology (HMIPv6). It is noted from FIG. 13B that if moving velocity of a MN increases, a wireless signaling cost is reduced up to about 60% to 65%. This shows that moving velocity of a MN is not related to registration due to handover in a virtual-IP zone, but to increases in the amount of a Binding Update message due to a change in access router at the outside of an access router in the conventional technology (HMIPv6).

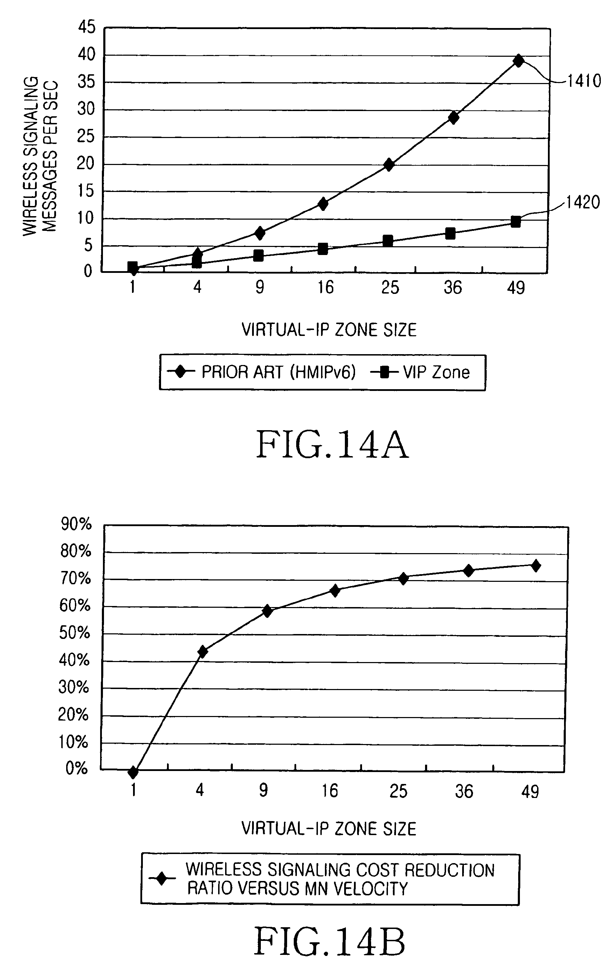

Next, a description will be made of a wireless signaling cost produced by a size of a virtual-IP zone. Here, a description will be made of an analysis result graph for a case where only a size of a default value in Table 1 is changed. In Table 1, a size of the virtual-IP zone ranges from 1 to 49. The analysis result graphs are illustrated in FIGs. 14A and 14B.

FIGs. 14A and 14B show analysis result graphs illustrating a change in wireless signaling cost in the conventional technology (HMIPv6) and the present invention when only a size of a virtual-IP zone is changed. In FIG. 14A, a wireless signaling cost is represented by a curve 1410 in case of the conventional technology, and a wireless signaling cost is represented by a curve 1420 in case of the present invention employing a virtual-IP zone. It can be understood from FIG. 14A that in case of an embodiment of the present invention, as a size of a virtual-IP zone increases, a wireless signaling cost increases linearly during a handover. However, in case of the conventional technology (HMIPv6), the wireless signaling cost increases exponentially.

A ratio between the two changes is illustrated in FIG. 14B. Referring to FIG. 14B, as a size of a virtual-IP zone increases, a wireless signaling reduction ratio due to assignment of a virtual-IP zone increases exponentially up to 80%. In the present invention, an increase in size of a virtual-IP zone is not related to a Binding Update message occurring due to handover in the virtual-IP zone. However, in the conventional technology (HMIPv6), when handover occurs outside a region of an access router, a Binding Update message increases.

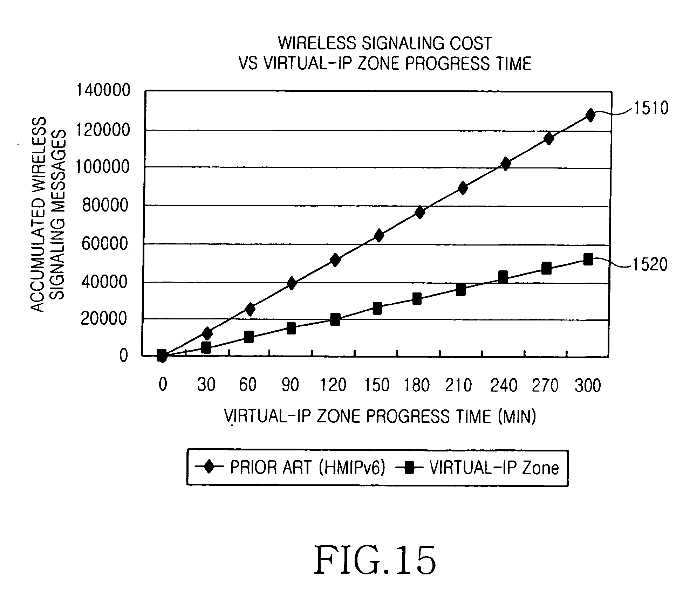

Finally, a description will be made of a signaling cost in a wireless channel with respect to a virtual-IP zone progress time (VPT). FIG. 15 is an analysis result graph for a signaling cost in a wireless channel with respect to a virtual-IP zone progress time according to an embodiment of the present invention. Although a unit used in FIGs. 13A, 13B, 14A and 14B is depicted as messages per second [msgs/sec], a unit used in FIG. 15 is depicted as messages per VPT [msgsNPT]. The virtual-IP zone state is maintained for several seconds to several minutes. The performance is determined by multiplying wireless signaling costs Ra and Rg by a VPT value based on a default value in Table 1. In FIG. 15, a curve 1510 represents an increase in cost function in case of the conventional technology (HMIPv6), and a curve 1520 represents an increase in cost function in case of the present invention.

It can be understood from FIG. 15 that as a virtual-IP zone progress time increases, a wireless signaling cost due to handover in a virtual-IP zone is linearly significantly reduced compared with the conventional technology (HMIPv6). For example, for VPT = 6 hours, the number of Binging Update messages for handover in a virtual-IP zone state is reduced by about 45000 as compared with the conventional technology (HMIPv6). This shows that the virtual-IP zone assignment scheme can significantly reduce a signaling cost not only in a wireless channel but also in a wired network link.

As is understood from the foregoing description, access routers are grouped into a virtual-IP zone in a HMIPv6 system, thereby remarkably reducing not only a wireless signaling cost but also a wired signaling cost.

While the invention has been shown and described with reference to a certain preferred embodiment thereof, it will be understood by those skilled in the art that various changes in form and details may be made therein without departing from the scope of the invention as defined by the appended claims.

**Claims**

1.  A method of forming a plurality of access routers (331-334) into a virtual-IP zone (340) in a Hierarchical Mobile IPv6 system, the method comprising the steps of:

    reporting a higher-than-threshold state message to a mobility anchor point (310) if a number of mobile nodes located in a region of an access router and a number of mobile nodes being handed over exceed a predetermined threshold; and
    simulcasting a virtual network prefix included in the virtual-IP zone forming command by the access routers receiving the virtual-IP zone forming command, for grouping.

2.  The method of claim 1, wherein each access router of said plurality of access routers performs said step of reporting.

3.  The method of claim 2, further comprising the step of sending by the mobility anchor point a virtual-IP zone forming command for grouping access routers into one group to the plurality of access routers if a state report message indicating a higher-than-threshold state is received.

4.  The method of claim 3, wherein the simulcasted virtual network prefix is an identical virtual network prefix.

5.  The method of one of claims 1 to 4, further comprising the steps of:

    forwarding a received binding update message to the mobility anchor point if the binding update message is received in a virtual-IP zone's IP address from the plurality of access routers forming the virtual-IP zone; and
    storing by the mobility anchor point, a virtual-IP zone's IP address, and an address of an access router to which a mobile node that transmitted the binding update message belongs.

6.  The method of one of claims 1 to 5, further comprising the steps of:

    a plurality of mobile nodes located in the virtual-IP zone updating a local care-of address to a virtual-IP zone's care-of address using the received virtual-IP zone's network prefix;
    generating a binding update message with the virtual-IP zone's care-of address; and
    transmitting the binding update message to the mobility anchor point via an access router in a region where the mobile node is located.

7.  The method of one of claims 1 to 6, wherein the mobility anchor point transmits the virtual-IP zone forming command to a plurality of predetermined access routers.

8.  The method of one of claims 1 to 7, wherein the mobility anchor point determines the plurality of access routers to be formed into a virtual-IP zone due to the threshold being exceeded, and transmits the virtual-IP zone forming command to the plurality of access routers to be formed into the virtual-IP zone.

9. The method of one of claims 1 to 8, further comprising the step of the plurality of access routers generating a lower-than-threshold state report message and sending the lower-than-threshold state report message to the mobility anchor point if the number of mobile nodes in a virtual-IP zone state and the number of mobile nodes being handed over becomes lower than a predetermined threshold.

10. The method of claim 9, further comprising the step of transmitting a virtual-IP zone release command to the plurality of access routers forming the virtual-IP zone upon receiving the lower-than-threshold state report message.

11. The method of claim 10, further comprising the step of simulcasting an original network prefix of each access router as a prefix upon receiving the virtual-IP zone release command.

12. The method of claim 11, further comprising the steps of:

updating a local care-of address using a received original network prefix for each access router,
generating a binding update message with the updated local care-of address, and
transmitting the binding update message to the mobility anchor point via an access router in a region where the mobile node is located.

13. The method of one of claims 1 to 12, further comprising the step of transmitting, by the mobile node, information on an access router at which a pilot signal is received through a Layer 2 source trigger signal to an access router currently in communication if an on-link address is identical in a virtual-IP zone state and a pilot signal received is higher than a current pilot signal.

14. The method of claim 13, further comprising the step of matching by the access router the Layer 2 source trigger signal received from the mobile node to an IP of a new access router included in the Layer 2 source trigger signal, generating a mobility report signal with the matched signal, and sending the mobility report signal to the mobility anchor point.

15. The method of claim 14, further comprising the step of updating location information of the mobile node upon receiving the mobility report signal of the mobile node from the access router.

16. The method of one of claims 1 to 15, wherein the mobility anchor point stores a virtual-IP zone's care-of address of the mobile node, a regional care-of address, and an address of an access router where the mobile node is located.

17. The method of claim 1, wherein forming the plurality of access routers into a virtual-IP zone is performed by an access router.

18. The method of claim 17, wherein said Hierarchical Mobile Ipv6 system includes a mobility anchor point and a plurality of access routers connected under the mobility anchor point.

19. The method of claim 18, wherein the virtual network prefix included in the virtual-IP zone forming command is simulcasted to mobile nodes.

20. The method of claim 19, wherein the access routers performing said step of simulcasting receive the virtual-IP zone forming command from the mobility anchor point.

21. The method of claim 20, further comprising the steps of:

sending a virtual-IP zone release request message to the mobility anchor point after forming the virtual-IP zone through simulcasting of the virtual network prefix, if the number of mobile nodes located in a region of the access router and the number of mobile nodes being handed over become lower than a predetermined threshold; and
simulcasting an original network prefix of the access router upon receiving a virtual-IP zone release signal from the mobility anchor point.

22. The method of claim 20 or 21, further comprising the steps of:

matching a target access router to which the mobile node will move, using information included in a movement update signal received from the mobile node; and

reporting the matching result to the mobility anchor point.

**23.** A method of forming a plurality of access routers (331-334) into a virtual-IP zone (340) in a mobility anchor point (310) in a Hierarchical Mobile IPv6 system, the method comprising the steps of:

sending a virtual-IP zone forming command for grouping the access routers into a virtual-IP zone to the access routers if a virtual-IP zone request message is received from at least one of the plurality of access routers connected under the mobility anchor point,; and

transmitting a virtual-IP zone release command to the plurality of access routers forming the virtual-IP zone if a virtual-IP zone release request message is received from the access routers forming the virtual-IP zone.

**24.** The method of claim 23, wherein the virtual-IP zone forming command for grouping the plurality of access routers into a virtual-IP zone is transmitted to a plurality of predetermined access routers.

**25.** The method of claim 23, wherein the virtual-IP zone forming command for grouping the access routers into a virtual-IP zone is made dynamically based on the virtual-IP zone request message.

**26.** The method of claim 23, wherein the virtual-IP zone forming command, after being retrieved from data bases of a plurality of access routers being grouped into the virtual-IP zone, is transmitted to access routers including an access router that transmitted the virtual-IP zone request message.

**27.** The method of claim 23, wherein the virtual-IP zone forming command is transmitted to a plurality of access routers, which are adjacent to an access router that sent the virtual-IP zone request message, and which are used to form a virtual-IP zone.

**Patentansprüche**

**1.** Verfahren zum Zusammenstellen einer Vielzahl von Zugangs-Routern (331-334) zu einer virtuellen IP-Zone (340) in einem Hierarchical-Mobile-lpv6-System, wobei das Verfahren die folgenden Schritte umfasst:

Übermitteln einer Nachricht über einen Status, der höher ist als ein Schwellenwert, zu einem Mobility Anchor Point (310), wenn eine Anzahl mobiler Knoten, die sich in einem Bereich eines Zugangs-Routers befinden, und eine Anzahl mobiler Knoten, für die Hand-Over durchgeführt wird, einen vorgegebenen Schwellenwert übersteigen; und

gleichzeitiges Ausstrahlen (simulcasting) eines virtuellen Netzwerk-Präfix, der in dem Befehl zum Zusammenstellen der virtuellen IP-Zone enthalten ist, durch die Zugangs-Router, die den Befehl zum Zusammenstellen der virtuellen IP-Zone empfangen, zum Gruppieren.

**2.** Verfahren nach Anspruch 1, wobei jeder Zugangs-Router der Vielzahl von Zugangs-Routern den Schritt des Übermittelns durchführt.

**3.** Verfahren nach Anspruch 2, das des Weiteren den Schritt des Sendens eines Befehls zum Ausbilden einer virtuellen IP-Zone zum Gruppieren von Zugangs-Routern zu einer Gruppe durch den Mobility Anchor Point zu der Vielzahl von Zugangs-Routern umfasst, wenn eine Statusbericht-Nachricht empfangen wird, die einen Status anzeigt, der höher ist als ein Schwellenwert.

**4.** Verfahren nach Anspruch 3, wobei der gleichzeitig ausgestrahlte virtuelle Netzwerk-Präfix ein identischer virtueller Netzwerk-Präfix ist.

**5.** Verfahren nach einem der Ansprüche 1 bis 4, das des Weiteren die folgenden Schritte umfasst:

Weiterleiten einer empfangenen Binding-Update-Nachricht zu dem Mobility Anchor Point, wenn die Binding-Update-Nachricht an einer IP-Adresse der virtuellen IP-Zone von der Vielzahl von Zugangs-Routern empfangen wird, die die virtuelle IP-Zone bilden; und

Speichern einer IP-Adresse der virtuellen IP-Zone und einer Adresse eines Zugangs-Routers, zu dem ein mobiler Knoten gehört, der die Binding-Update-Nachricht gesendet hat, durch den Mobility Anchor Point.

**6.** Verfahren nach einem der Ansprüche 1 bis 5, das des Weiteren die folgenden Schritte umfasst:

Aktualisieren einer lokalen Care-of-Adresse auf eine Care-of-Adresse der virtuellen IP-Zone unter Verwendung des empfangenen Netzwerk-Präfix der virtuellen IP-Zone durch eine Vielzahl mobiler Knoten, die sich in der virtuellen IP-Zone befinden;
Erzeugen einer Binding-Update-Nachricht mit der Care-of-Adresse der virtuellen IP-Zone; und
Senden der Binding-Update-Nachricht zu dem Mobility Anchor Point über einen Zugangs-Router in einem Bereich, in dem sich der mobile Knoten befindet.

**7.** Verfahren nach einem der Ansprüche 1 bis 6, wobei der Mobility Anchor Point den Befehl zum Zusammenstellen der virtuellen IP-Zone zu einer Vielzahl vorgegebener Zugangs-Router sendet.

**8.** Verfahren nach einem der Ansprüche 1 bis 7, wobei der Mobility Anchor Point die Vielzahl von Zugangs-Routern bestimmt, die auf Grund des Überschreitens des Schwellenwertes zu einer virtuellen IP-Zone zusammenzustellen sind, und den Befehl zum Zusammenstellen der virtuellen IP-Zone zu der Vielzahl von Zugangs-Routern sendet, die zu der virtuellen IP-Zone zusammengestellt werden sollen.

**9.** Verfahren nach einem der Ansprüche 1 bis 8, das des Weiteren den Schritt des Erzeugens einer Nachricht mit einem Bericht über einen Status, der niedriger ist als ein Schwellenwert, und des Sendens der Nachricht mit einem Bericht über einen Status, der niedriger ist als ein Schwellenwert, zu dem Mobility Anchor Point durch die Vielzahl von Zugangs-Routern umfasst, wenn die Anzahl mobiler Knoten in einem Zustand der virtuellen IP-Zone und der Anzahl von Mobilknoten, für die Hand-Over durchgeführt wird, niedriger wird als ein vorgegebener Schwellenwert.

**10.** Verfahren nach Anspruch 9, das des Weiteren den Schritt des Sendens eines Befehls zur Freigabe der virtuellen IP-Zone zu der Vielzahl von Zugangs-Routern, die die virtuellen IP-Zone bilden, beim Empfang der Nachricht des Berichtes über einen Status, der niedriger ist als ein Schwellenwert, umfasst.

**11.** Verfahren nach Anspruch 10, das des Weiteren den Schritt des gleichzeitigen Ausstrahlens eines Original-Netzwerk-Präfix jedes Zugangs-Routers als einen Präfix beim Empfangen des Befehls zur Freigabe der virtuellen IP-Zone umfasst.

**12.** Verfahren nach Anspruch 11, das des Weiteren die folgenden Schritte umfasst:

Aktualisieren einer lokalen Care-of-Adresse unter Verwendung eines empfangenen Original-Netzwerk-Präfix für jeden Zugangs-Router,
Erzeugen einer Binding-Update-Nachricht mit der aktualisierten lokalen Care-of-Adresse, und
Senden der Binding-Update-Nachricht zu dem Mobility Anchor Point über einen Zugangs-Router in einem Bereich, in dem sich der mobile Knoten befindet.

**13.** Verfahren nach einem der Ansprüche 1 bis 12, das des Weiteren den Schritt des Sendens von Informationen über einen Zugangs-Router, an dem ein Pilot-Signal empfangen wird, über ein Layer-2-Source-Trigger-Signal zu einem Zugangs-Router, der aktuell kommuniziert, durch den mobilen Knoten umfasst, wenn eine On-Link-Adresse identisch mit einem Status der virtuellen IP-Zone ist und ein empfangenes Pilot-Signal stärker ist als ein aktuelles Pilot-Signal.

**14.** Verfahren nach Anspruch 13, das des Weiteren den Schritt des Anpassens des von dem mobilem Knoten empfangen Layer-2-Source-Trigger-Signals an eine IP eines neuen Zugangs-Routers, die in dem Layer-2-Source-Trigger-Signal enthalten ist, des Erzeugens eines Mobility-Report-Signals mit dem angepassten Signal und des Sendens des Mobility-Report-Signals zu dem Mobility Anchor Point durch den Zugangs-Router umfasst.

**15.** Verfahren nach Anspruch 14, das des Weiteren den Schritt des Aktualisierens von Standortinformationen des mobilen Knotens beim Empfangen des Mobility-Report-Signals des mobilen Knotens von dem Zugangs-Router umfasst.

**16.** Verfahren nach einem der Ansprüche 1 bis 15, wobei der Mobility Anchor Point eine Care-of-Adresse des mobilen Knotens der virtuellen IP-Zone, eine regionale Care-of-Adresse und eine Adresse eines Zugangs-Routers speichert, an dem sich der mobile Knoten befindet.

17. Verfahren nach Anspruch 1, wobei Zusammenstellen der Vielzahl von Zugangs-Routern zu einer virtuellen IP-Zone durch einen Zugangs-Router durchgeführt wird.

18. Verfahren nach Anspruch 17, wobei das Hierarchical-Mobile-Ipv6-System einen Mobility Anchor Point und eine Vielzahl von Zugangs-Routern enthält, die unter dem Mobility Anchor Point verbunden sind.

19. Verfahren nach Anspruch 18, wobei der virtuelle Netzwerk-Präfix, der in dem Befehl zum Zusammenstellen der virtuellen IP-Zone enthalten ist, gleichzeitig an Mobilknoten ausgestrahlt wird.

20. Verfahren nach Anspruch 19, wobei die Zugangs-Router, die den Schritt des gleichzeitigen Ausstrahlens durchführen, den Befehl zum Zusammenstellen der virtuellen IP-Zone von dem Mobility Anchor Point empfangen.

21. Verfahren nach Anspruch 20, das des Weiteren die folgenden Schritte umfasst:

Senden einer Nachricht zum Anfordern von Freigabe der virtuellen IP-Zone zu dem Mobility Anchor Point nach Ausbilden der virtuellen IP-Zone über gleichzeitiges Ausstrahlen des virtuellen Netzwerk-Präfix, wenn die Anzahl von Mobilknoten, die sich in einem Bereich des Zugangs-Routers befinden, und die Anzahl mobiler Knoten, für die Hand-Over durchgeführt wird, niedriger werden als ein vorgegebener Schwellenwert; und
gleichzeitiges Ausstrahlen eines Original-Netzwerk-Präfix des Zugangs-Routers beim Empfangen eines Signals zur Freigabe der virtuellen IP-Zone von dem Mobility Anchor Point.

22. Verfahren nach Anspruch 20 oder 21, das des Weiteren die folgenden Schritte umfasst:

Anpassen eines Ziel-Zugangs-Routers, zu dem sich der mobile Knoten bewegen wird, unter Verwendung von Informationen, die in einem Bewegungs-Update-Signal enthalten sind, das von dem mobilen Knoten empfangen wird; und
Übermitteln des Anpassungsergebnisses zu dem Mobility Anchor Point.

23. Verfahren zum Zusammenstellen einer Vielzahl von Zugangs-Routern (331-334) zu einer virtuellen IP-Zone (340) in einem Mobility Anchor Point (310) in einem Hierarchical-Mobile-Ipv6-System, wobei das Verfahren die folgenden Schritte umfasst:

Senden eines Befehls zum Zusammenstellen einer virtuellen IP-Zone zum Gruppieren der Zugangs-Router zu einer IP-Zone zu den Zugangs-Routern, wenn eine Nachricht der Anforderung einer virtuellen IP-Zone von wenigstens einem der Vielzahl von Zugangs-Routern empfangen wird, die unter dem Mobility Anchor Point verbunden sind; und
Senden eines Befehls zur Freigabe der virtuellen IP-Zone an die Vielzahl von Zugangs-Routern, die die virtuelle IP-Zone bilden, wenn eine Nachricht zum Anfordern von Freigabe der virtuellen IP-Zone von den Zugangs-Routern empfangen wird, die die virtuelle IP-Zone bilden.

24. Verfahren nach Anspruch 23, wobei der Befehl zum Zusammenstellen der virtuellen IP-Zone zum Gruppieren der Vielzahl von Zugangs-Routern zu einer virtuellen IP-Zone zu einer Vielzahl vorgegebener Zugangs-Router gesendet wird.

25. Verfahren nach Anspruch 23, wobei der Befehl zum Zusammenstellen der virtuellen IP-Zone zum Gruppieren der Zugangs-Router zu einer virtuellen IP-Zone auf Basis der Anforderungsnachricht der virtuellen IP-Zone dynamisch gemacht wird.

26. Verfahren nach Anspruch 23, wobei der Befehl zum Zusammenstellen der virtuellen IP-Zone, nachdem er aus Datenbanken einer Vielzahl von Zugangs-Routern abgerufen wird, die zu der virtuellen IP-Zone gruppiert sind, zu Zugangs-Routern einschließlich eines Zugangs-Routers gesendet wird, der die Anforderungsnachricht der virtuellen IP-Zone gesendet hat.

27. Verfahren nach Anspruch 23, wobei der Befehl zum Zusammenstellen der virtuellen IP-Zone zu einer Vielzahl von Zugangs-Routern gesendet wird, die an einen Zugangs-Router angrenzen, der der Anforderungsnachricht der virtuellen IP-Zone gesendet hat, und die verwendet werden, um eine virtuelle IP-Zone zusammenzustellen.

**Revendications**

1.  Procédé de constitution d'une pluralité de routeurs d'accès (331 à 334) en une zone IP virtuelle (340) dans un système IPv6 mobile hiérarchique, le procédé comprenant les étapes consistant à :

    rendre compte d'un message d'état de dépassement de seuil à un point d'ancre de mobilité (310) si un certain nombre de noeuds mobiles situés dans une région d'un routeur d'accès et un certain nombre de noeuds mobiles desservis dépassent un seuil prédéterminé ; et
    diffuser simultanément un préfixe de réseau virtuel compris dans l'instruction de constitution de zone IP virtuelle par les routeurs d'accès recevant l'instruction de constitution de zone IP virtuelle, en vue d'un groupage.

2.  Procédé selon la revendication 1, dans lequel chaque routeur d'accès parmi ladite pluralité de routeurs d'accès réalise ladite étape de compte rendu.

3.  Procédé selon la revendication 2, comprenant de plus l'étape d'envoi, par le point d'ancre de mobilité, d'une instruction de constitution de zone IP virtuelle pour grouper des routeurs d'accès en un groupe, à la pluralité de routeurs d'accès, si un message de compte rendu d'état indiquant un état de dépassement de seuil est reçu.

4.  Procédé selon la revendication 3, dans lequel le préfixe de réseau virtuel diffusé simultanément est un préfixe de réseau virtuel identique.

5.  Procédé selon l'une des revendications 1 à 4, comprenant de plus les étapes consistant à :

    propager un message de mise à jour de liaison reçu au point d'ancre de mobilité si le message de mise à jour de liaison est reçu dans une adresse IP de zone IP virtuelle depuis la pluralité de routeurs d'accès constituant la zone IP virtuelle ; et
    stocker, par le point d'ancre de mobilité, une adresse IP de zone IP virtuelle et une adresse d'un routeur d'accès auquel un noeud mobile qui a transmis le message de mise à jour de liaison appartient.

6.  Procédé selon l'une des revendications 1 à 5, comprenant de plus les étapes consistant à :

    faire mettre à jour par une pluralité de noeuds mobiles situés dans la zone IP virtuelle une adresse aux-bons-soins-de locale à une adresse aux-bons-soins-de de zone IP virtuelle en utilisant le préfixe de réseau de zone IP virtuelle reçu ;
    générer un message de mise à jour de liaison avec l'adresse aux-bons-soins-de de zone IP virtuelle ; et
    transmettre le message de mise à jour de liaison au point d'ancre de mobilité par l'intermédiaire d'un routeur d'accès dans une région où le noeud mobile est situé.

7.  Procédé selon l'une des revendications 1 à 6, dans lequel le point d'ancre de mobilité transmet l'instruction de constitution de zone IP virtuelle à une pluralité de routeurs d'accès prédéterminés.

8.  Procédé selon l'une des revendications 1 à 7, dans lequel le point d'ancre de mobilité détermine la pluralité de routeurs d'accès à intégrer dans une zone IP virtuelle à cause du seuil dépassé et transmet l'instruction de constitution de zone IP virtuelle à la pluralité de routeurs d'accès à intégrer dans la zone IP virtuelle.

9.  Procédé selon l'une des revendications 1 à 8, comprenant de plus l'étape consistant à faire générer par la pluralité de routeurs d'accès un message de compte rendu d'état de non-dépassement de seuil et à envoyer le message de compte rendu d'état de non-dépassement de seuil au point d'ancre de mobilité si le nombre de noeuds mobiles dans un état de zone IP virtuelle et le nombre de noeuds mobiles desservis deviennent inférieurs à un seuil prédéterminé.

10. Procédé selon la revendication 9, comprenant de plus l'étape consistant à transmettre une instruction de libération de zone IP virtuelle à la pluralité de routeurs d'accès constituant la zone IP virtuelle lors de la réception du message de compte rendu d'état de non-dépassement de seuil.

11. Procédé selon la revendication 10, comprenant de plus l'étape consistant à diffuser simultanément un préfixe de réseau original de chaque routeur d'accès comme un préfixe lors de la réception de l'instruction de libération de zone IP virtuelle.

**12.** Procédé selon la revendication 11, comprenant de plus les étapes consistant à :

mettre à jour une adresse aux-bons-soins-de locale en utilisant un préfixe de réseau original reçu pour chaque routeur d'accès,
générer un message de mise à jour de liaison avec l'adresse aux-bons-soins-de locale mise à jour, et transmettre le message de mise à jour de liaison au point d'ancre de mobilité par l'intermédiaire d'un routeur d'accès dans une région où le noeud mobile est situé.

**13.** Procédé selon l'une des revendications 1 à 12, comprenant de plus l'étape consistant à transmettre, par le noeud mobile, une information sur un routeur d'accès au niveau duquel un signal de pilote est reçu par l'intermédiaire d'un signal de déclenchement de source de couche 2 à un routeur d'accès en communication à ce moment là, si une adresse de liaison est identique dans un état de zone IP virtuelle et un signal de pilote reçu est plus élevé qu'un signal de pilote courant.

**14.** Procédé selon la revendication 13, comprenant de plus l'étape consistant à faire vérifier la correspondance par le routeur d'accès du signal de déclenchement de source de couche 2 reçu depuis le noeud mobile par rapport à une IP d'un nouveau routeur d'accès compris dans le signal de déclenchement de source de couche 2, à générer un signal de compte rendu de mobilité avec le signal mis en correspondance et à envoyer le signal de compte rendu de mobilité au point d'ancre de mobilité.

**15.** Procédé selon la revendication 14, comprenant de plus l'étape consistant à mettre à jour l'information d'emplacement du noeud mobile lors de la réception du signal de compte rendu de mobilité du noeud mobile depuis le routeur d'accès.

**16.** Procédé selon l'une des revendications 1 à 15, dans lequel le point d'ancre de mobilité stocke une adresse aux-bons-soins-de de zone IP virtuelle du noeud mobile, une adresse aux-bons-soins-de régionale et une adresse d'un routeur d'accès où le noeud mobile est situé.

**17.** Procédé selon la revendication 1, dans lequel la constitution de la pluralité de routeurs d'accès en une zone IP virtuelle est réalisée par un routeur d'accès.

**18.** Procédé selon la revendication 17, dans lequel ledit système IPv6 mobile hiérarchique comprend un point d'ancre de mobilité et une pluralité de routeurs d'accès connectés sous le point d'ancre de mobilité.

**19.** Procédé selon la revendication 18, dans lequel le préfixe de réseau virtuel compris dans l'instruction de constitution de zone IP virtuelle est diffusé simultanément aux noeuds mobiles.

**20.** Procédé selon la revendication 19, dans lequel les routeurs d'accès réalisant ladite étape de diffusion simultanée reçoivent l'instruction de constitution de zone IP virtuelle depuis le point d'ancre de mobilité.

**21.** Procédé selon la revendication 20, comprenant de plus les étapes consistant à :

envoyer un message de demande de libération de zone IP virtuelle au point d'ancre de mobilité après la constitution de la zone IP virtuelle par l'intermédiaire de la diffusion simultanée du préfixe de réseau virtuel si le nombre de noeuds mobiles situés dans une région du routeur d'accès et le nombre de noeuds mobiles desservis deviennent inférieurs à un seuil prédéterminé ; et
diffuser simultanément un préfixe de réseau original du routeur d'accès lors de la réception d'un signal de libération de zone IP virtuelle depuis le point d'ancre de mobilité.

**22.** Procédé selon la revendication 20 ou 21, comprenant de plus les étapes consistant à :

vérifier un routeur d'accès cible vers lequel le noeud mobile va se déplacer, en utilisant une information comprise dans un signal de mise à jour de mouvement reçu depuis le noeud mobile ; et
rendre compte du résultat de la vérification au point d'ancre de mobilité.

**23.** Procédé de constitution d'une pluralité de routeurs d'accès (331 à 334) en une zone IP virtuelle (340) dans un point d'ancre de mobilité (310) dans un système IPv6 mobile hiérarchique, le procédé comprenant les étapes consistant à :

envoyer une instruction de constitution de zone IP virtuelle pour grouper les routeurs d'accès en une zone IP virtuelle aux routeurs d'accès si un message de demande de zone IP virtuelle est reçu depuis au moins un parmi la pluralité de routeurs d'accès connectés sous le point d'ancre de mobilité ; et
transmettre une instruction de libération de zone IP virtuelle à la pluralité de routeurs d'accès constituant la zone IP virtuelle si un message de demande de libération de zone IP virtuelle est reçu depuis les routeurs d'accès constituant la zone IP virtuelle.

24. Procédé selon la revendication 23, dans lequel l'instruction de constitution de zone IP virtuelle pour grouper la pluralité de routeurs d'accès en une zone IP virtuelle est transmise à une pluralité de routeurs d'accès prédéterminés.

25. Procédé selon la revendication 23, dans lequel l'instruction de constitution de zone IP virtuelle pour grouper les routeurs d'accès en une zone IP virtuelle est réalisée dynamiquement sur la base du message de demande de zone IP virtuelle.

26. Procédé selon la revendication 23, dans lequel l'instruction de constitution de zone IP virtuelle, après avoir été récupérée à partir de bases de données d'une pluralité de routeurs d'accès groupés en la zone IP virtuelle, est transmise aux routeurs d'accès comprenant un routeur d'accès qui a transmis le message de demande de zone IP virtuelle.

27. Procédé selon la revendication 23, dans lequel l'instruction de constitution de zone IP virtuelle est transmise à une pluralité de routeurs d'accès qui sont adjacents à un routeur d'accès qui a envoyé le message de demande de zone IP virtuelle et qui sont utilisés pour constituer une zone IP virtuelle.

FIG.1

FIG.2

330

320

CN

HA

IP NETWORK

300

MAP — 310

340

331
AR1

332
AR2

333
AR23

334
AR4

Virtual-IP Zone

351

MN

# FIG.3

FIG.4

Virtual-IP Zone A Virtual-IP Zone B

Virtual-IP Zone C Virtual-IP Zone D

Static Virtual-IP Zone

# FIG.5A

Virtual-IP Zone A    Virtual-IP Zone B

Virtual-IP Zone D

Dynamic Virtual-IP Zone

# FIG.5B

FIG.6

FIG.7

AR ACCOMMODATE MN — 700

PARAMETER OF AR > Th? — 702

NO → MN COMMUNICATE WITH CN VIA CURRENT AR — 704

YES → AR SIMULCAST Virtual NETWORK PREFIX — 706

NEW NETWORK PREFIX DETECTED? — 708

NO (loop back)

YES → MN'S AUTOCONFIGURATION — 710 → MN UPDATE LOCAL BINDING — 712 → MN COMMUNICATE WITH CN VIA CURRENT AR — 714

L2-ST RECEIVED? — 716

NO → MN COMMUNICATE WITH CN VIA CURRENT AR — 704

YES → AR PERFORM MOVEMENT UPDATE TO MAP — 718 → MAP SET UP HOST ROUTING — 720 → MN COMMUNICATION WITH CN VIA NEW AR — 722

PARAMETER OF AR ≤ Th? — 724

NO (loop back)

YES → AR SIMULCAST ORIGINAL NETWORK PREFIX — 726

NEW NETWORK PREFIX DETECTED? — 728

NO (loop back)

YES → MN'S AUTOCONFIGURATION — 730 → MN UPDATE LOCAL BINDING — 732 → MN COMMUNICATE WITH CN VIA CURRENT AR — 734

31

FIG.8

FIG.9

EP 1 564 958 B1

FIG.10

FIG.11

MAP AREA

| AR 43 | AR 44 | AR 45 | AR 46 | AR 47 | AR 48 | AR 49 |
|-------|-------|-------|-------|-------|-------|-------|
| AR 42 | AR 21 | AR 22 | AR 23 | AR 24 | AR 25 | AR 26 |
| AR 41 | AR 20 | AR 7 | AR 8 | AR 9 | AR 10 | AR 27 |
| AR 40 | AR 19 | AR 6 | AR 1 | AR 2 | AR 11 | AR 28 |
| AR 39 | AR 18 | AR 5 | AR 4 | AR 3 | AR 12 | AR 29 |
| AR 38 | AR 17 | AR 16 | AR 15 | AR 14 | AR 13 | AR 30 |
| AR 37 | AR 36 | AR 35 | AR 34 | AR 33 | AR 32 | AR 31 |

▨ : Virtual-IP Zone

FIG.12

EP 1 564 958 B1

FIG.13A

FIG.13B

FIG.14A

FIG.14B

WIRELESS SIGNALING COST
VS VIRTUAL-IP ZONE PROGRESS TIME

FIG.15